(19) Europäisches Patentamt
European Patent Office
Office européen des brevets

(11) EP 3 303 204 B1

# (12) EUROPEAN PATENT SPECIFICATION

(45) Date of publication and mention of the grant of the patent:
**09.10.2019 Bulletin 2019/41**

(21) Application number: **16729615.1**

(22) Date of filing: **01.06.2016**

(51) Int Cl.:
***B66C 13/02*** *(2006.01)* ***B63B 39/00*** *(2006.01)*
***B66C 23/53*** *(2006.01)* ***B66D 1/50*** *(2006.01)*
***B66D 1/52*** *(2006.01)* ***B63B 17/00*** *(2006.01)*

(86) International application number:
**PCT/GB2016/051596**

(87) International publication number:
**WO 2016/193713 (08.12.2016 Gazette 2016/49)**

## (54) METHOD AND APPARATUS FOR ADAPTIVE MOTION COMPENSATION

VERFAHREN UND VORRICHTUNG ZUR ADAPTIVEN BEWEGUNGSKOMPENSATION

MÉTHODE ET APPAREIL POUR LA COMPENSATION ADAPTATIVE DE MOUVEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.06.2015 GB 201509487**

(43) Date of publication of application:
**11.04.2018 Bulletin 2018/15**

(73) Proprietor: **Marine Electrical Consulting Limited**
**Eaglescliffe**
**Stockton on Tees**
**TS16 9AU (GB)**

(72) Inventors:
- **NEVADO, Antonio**
  **28750 Madrid (ES)**
- **CAIRNS, Paul Robert**
  **Durham TS16 9AU (GB)**
- **ROMAN, Luis Miguel Guillian**
  **36206 Vigo (ES)**

(74) Representative: **Murgitroyd & Company**
**Scotland House**
**165-169 Scotland Street**
**Glasgow G5 8PL (GB)**

(56) References cited:
**EP-A1- 2 636 632**
**WO-A1-2005/090226**
**WO-A1-2014/062792**
**WO-A1-2015/028636**
**CN-A- 101 713 982**
**CN-A- 103 318 776**
**GB-A- 2 142 161**
**JP-A- 2002 020 080**
**KR-A- 20110 125 555**
**US-A1- 2010 230 370**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates generally to the field of motion compensation, and in particular, to an adaptive method for motion compensation of a load on a moving body, and even more particularly, to motion compensation of a load coupled to a moving vessel via a rope or wire and being positioned on a predetermined path.

## Introduction

Offshore and Subsea construction activities frequently involve the lifting, lowering and accurate positioning or transfer of loads, equipment and machinery either above the sea (in air) and beneath the surface of the sea (subsea). These loads are usually handled by lifting devices and appliances, such as wires or synthetic ropes (referred to as wires) that are hoisted by any suitable hoisting device such as, for example, winches. The wires may be fixed to supporting structures such as cranes, A-frames, gantries and towers.

### *(a) Offshore Load Lifting*

In general, a lifting device may comprise a fixed, moveable and/or articulated mechanical support structure that is mounted on a vessel. One or more lifting wire(s) or rope(s) are operatively supported by the support structure and coupled with a powered actuator such as, for example, a winch. A load connected to the lifting wire can be controlled by winch operation. Typically, the wire is routed from the winch to a final over-boarding sheave (i.e. load suspension point), wherein the wire may be passed through a number of sheaves (e.g. pulleys), directing the wire from the winch location to its final over boarding sheave, or the wire may be passed directly from the winch to the final over boarding sheave (i.e. load suspension point).

The support structure may be a fixed structure, such as, for example, a lifting frame, a drilling derrick or a tower, or it may be a moveable and articulated structure, such as, for example, a crane or lifting frame. A particular example may be an A-frame. The crane may comprise a mast, a lattice boom, a knuckle boom (articulated) or a telescopic boom, and would normally be able to slew (rotate), luff (boom up/down) and/or hoist (reel in/out).

Mast and lattice boom cranes are generally used for heavier loads, wherein knuckle boom and telescopic cranes are used for lighter loads.

A lift winch may be of the single drum type, where the wire is stored in layers and the load is supported from the same drum, or of the storage/traction or capstan type arrangement, where the wire is stored on one drum and the load is handled by a separate capstan type winch with a dual drum mechanism and multiple sheave arrangement. The simple single drum type is often utilised for lighter loads, since it has limited capabilities, due to an increase of the load when the wire in the lower layers is crushed. For heavier loads, the storage/traction arrangement is typically employed. Single or multiple parallel lift winches may also be used, depending on the load rating of the system.

The lifting device (e.g. winch) may be driven hydraulically, pneumatically or electrically, though pneumatic power may only be used at the lighter loads ranges.

Loads typically installed subsea may include infrastructure and equipment for oil and gas exploration and production and/or renewable energy production. For example, the load may be drilling equipment; well head equipment; valves; manifolds; templates; subsea production equipment, such as skids and pumping units; umbilicals; risers; flowlines and accessories, such as end terminations; adapters and clamps; pipeline repair equipment; j-tube seals; submarine power and telecommunications cables. Other loads may be subsea equipment and machinery required to assist with any construction activities, geotechnical surveys; inspections; installations, assemblies, activations/deactivations, remote interventions, or maintenance and repair. Furthermore, the loads may also be remotely operated vehicles (ROVs); autonomous underwater vehicles (AUVs); trenching vehicles or ploughs (used for pipeline or cable burial); diving bells (for lowering divers); equipment & tooling baskets; well intervention equipment and survey equipment such as used for core penetration, drilling and sampling.

Loads typically installed topside (i.e. surface) may comprise modules for production and accommodation; high voltage substation modules; foundations; jackets, monopiles; wind turbines, tripods, caissons and transition pieces for offshore windfarms and any associated equipment, such as machinery, plant, tools, jigs and fixtures required to support installation activities.

Although such loads (subsea and topside) are generally large and heavy, they may also be very fragile, therefore, requiring very delicate and precise handling, as well as, accurate positioning. This is particularly important when handling loads from a moving vessel onto a relatively fixed structure, either topside or subsea, or when passing loads from topside through the *'splash zone'* (i.e. the air/water interface) and through a water column subsea.

However, handling any type of load with any degree of precision or accuracy is particularly difficult from a moving (floating) vessel, as the motion of that vessel caused by, for example, wave excitation is directly transmitted to the load. Also, activities such as launching and recovering subsea vehicles (ROVs), which require subsea docking of the vehicle into a tether management system (TMS) prior to recovery, are dependent on a stable position of the docking head.

Consequently, offshore load handling activities and the like are significantly limited by weather conditions potentially leading to increased cost through weather downtime, low asset utilisation and operational inefficiencies.

*(b) Limitations*

Load motion induced by vessel motion can cause high differential or closing speeds between the fixed structure that the load is to interface with and the moving load, leading to very damaging impact energies. This can result in equipment damage and failure and in extreme cases may lead to environmental damage if the subsea hardware integrity is compromised.

During *'splash zone'* crossings, vessel motion, wave slamming and drag can further cause damage to equipment, but more crucially, may cause alternate slack & tight lifting wire conditions. *'Slack wire'* may be caused when the load is semi-submerged and the vessel 'heaves' downwards, i.e. moves down in a vertical direction. Another reason for 'slack wire' may be that the drag and partial buoyancy of the load result in the load not moving downwards as fast as the vessel. However, when the vessel 'heaves' up again (assuming a reasonably cyclical and symmetrical vessel motion) the wire tension can increase significantly as the vessel tries to pull the load upwards back into its previous position. This dramatic increase in wire tension may be referred to as *'snatch loading'.*

A similar situation can occur when recovering and/or *'breaking out'* loads from the seabed that have a relatively large surface touchdown area. Suction forces between the seabed material and the structure can therefore result in a similar *'slack wire'* condition. This is particularly hazardous and may lead to wire- or rigging failure, damage to the winch or load, and potential structural overload of the lifting device. These potential risks may also severely compromise the safety of the personnel involved in the lifting operation.

Another constraint of using lifting wires is that the wires are inherently elastic, wherein the elasticity in synthetic wire or rope is significantly higher than, for example, in a steel wire. Under load, the lifting wire can act as a spring/damper mechanism that couples the vessel motion directly to the load. It is understood that the vessel/load coupling has its own natural frequency a particular vessel motion may excite the vessel/load coupling at this natural frequency, so that the occurring resonance may result in amplified oscillations. The natural frequency tends to decrease when the wire length increases potentially converge with the vessel motion frequency. Consequently, in deeper water operations, excitation and resonance can become a significant problem that can lead to potentially catastrophic results.

Another known constraint of lifting wires is that in deep water lifting operations, subsea ocean currents can cause the lifting wire to adopt a pseudo-parabolic shape (i.e. catenary shape) between the vessel and the load, so that the vessel's heave motion affects the load motion in a more complex manner compared to a strictly vertical wire connection.

*(c) Motion Compensation*

Motion compensation can broadly fit into three functional categories: *Passive, Active and Hybrid,* utilizing up to three actuator categories: *Rotary, Linear and Hybrid* to compensate for varying degrees of freedom (DOF) ranging from one DOF up to six DOF.

Passive Compensation:

These systems generally utilise linear actuators such as hydraulic (oil filled) cylinders with nitrogen filled accumulators acting as a spring/damper or *'shock absorber',* passively resisting changes in the load position induced by vessel motion. Passive heave compensators are usually introduced directly into the load path and either hung from the crane hook, with the load directly suspended from the cylinder, or implemented as a *'flying sheave',* i.e. a cylinder with sheaves (pulleys) at either end over which the lifting wire is wrapped.

A passive heave compensator reacts passively to changes of force in the lift wire, generally induced by the vessel motion. As the vessel heaves up and the force increases due to the load resisting the motion (i.e. the load resists being lifted), the cylinder extends so as to compress the accumulator gas on one side of the cylinder, therefore, storing the motion energy. When the vessel heaves down again, the stored energy from the compressed gas in the accumulator is released, retracting the cylinder to its original position. However, the load position is not explicitly, actively or accurately controlled, but is merely a passive result of the changes in load forces.

Nevertheless, passive compensators can be very effective at eliminating resonance frequencies and at reducing differential speeds between the moving load and the fixed structure. Passive compensators do not require any power supply providing a simple, cost effective, robust and safe operation, and are suited to loads that have a high surface area or drag.

However, passive compensators have to be specifically 'tuned' to a particular lifting operation, requiring the gas pressures and volumes to be adjusted to a very specific application. The adjustment requires detailed computer simulation and/or modeling of the specific lifting operation, which can be very time consuming and costly, due to the needed specialist personnel and equipment necessary to set up the equipment. Once the passive compensator(s) is set up for a particular lifting application, it cannot easily be set up for any other lifting application, as it requires remodeling and readjustment.

Figure 1 (a) illustrates a simplified schematic example of a passive motion control system as it may be used offshore on a vessel 10 when moving a load 12 subsea, utilising spring and/or damper system 14, a winch 16 and a crane/pulley mechanism 18.

Active Compensation:

Active compensation, as is provided, for example, by an active heave compensation system (AHC), differs from passive motion compensation, in that the load position is explicitly controlled by continuously determining the vessel motion, for example, with a Motion Reference Unit (MRU), calculating the vertical motion at an over boarding point (e.g. load suspension point) of the lift wire (usually a sheave), and applying an equal and opposite compensation movement of the wire so as to cancel out the vessel motion. Generally, the AHC control system automatically sends a heave compensation control signals to the winch and/or linear actuator, so as to provide a stable load position relative to a predetermined reference point (e.g. earth reference frame), irrespective of the vessel motion.

Consequently, loads can be positioned very accurately, significantly opening the available operational weather window and enabling safer, more accurate load transfer between moving vessel and fixed structures or objects.

Figure 1 (b) illustrates a simplified schematic example of an active motion control system as it may be used offshore on a vessel 10 when moving a load 12 subsea, for example to a location on the seabed floor 20 (the control mechanism and actuator are not shown).

Hybrid Heave Compensation:

The large power consumption required for a high capacity active heave compensation systems coupled with the perceived vulnerabilities of system failure due to complexity has led to implementations of so called *hybrid systems.* Here, the primary load handling cylinders utilise passive compensation, including a secondary smaller capacity active positioning cylinder that utilises the active compensation. This mainly results in decreased power consumption and a certain degree of redundancy, because a failure of the active compensation system still allows the passive compensation system to continue.

However, although active heave compensation and platform stabilisation systems have existed for some time, they are still proprietary and single application-, equipment- and/or vessel specific. Consequently, presently employed motion compensator systems are very much bespoke systems that are designed specifically for a particular application or machine, that require a significant amount of re-engineering or adaptation if used with a different application. Furthermore, the accuracy and reliability of currently available active or hybrid compensation systems still lack the precision often required when handling loads either topside or subsea.

For example. US2010/0230370 describes a crane control with active heave compensation utilising, *inter alia,* a predicted future movement of a load suspension point based on current heave movement and a model of the heave movement. Furthermore, the crane control procedure described in US2010/0230370 provides a dynamic model for the crane system (winch, resilient rope) including given approximations of the actuator dynamics (winch acceleration / speed).

CN103318776 describes an active heave compensation control system and control method utilising, *inter alia,* real-time detection of heave movement, dynamic tension of the rope, as well as, movement of the lifting reel (encoder), to determine predictive parameters for a future time period.

Accordingly, it is an object of the present invention to provide an improved method and system for motion compensation in offshore load lifting operation. In particular, it is an object of the present invention to provide a method for adaptive motion compensation of a load controlled by at least one actuator that provides an increased accuracy in offshore load handling, and further to provide an adaptive controller that is capable of controlling / operating any motion compensation system.

## Summary of the Invention

Preferred embodiment(s) of the invention seek to overcome one or more of the above disadvantages of the prior art.

According to a first embodiment of the invention there is provided a method for adaptive motion compensation of a load controlled by at least one first actuator on a moving vessel, comprising the steps of:

(a) obtaining motion data of the moving vessel for a predefined first time interval in at least one first Degree of Freedom (DOF) relative to a first reference point from at least one first sensor;

(b) providing at least one geometric characteristic of said at least one first actuator in relation to a second reference point on the moving vessel;

(c) determining at least one performance parameter of said at least one first actuator for said predefined first time interval utilising at least one second sensor;

(d) determining an initial position of said load in relation to said first reference point and/or said second reference point;

(e) generating a predicted motion model of the moving vessel for a predefined second time interval, subsequent to said predefined first time interval, from said motion data;

(f) generating a control algorithm adapted to control said at least one first actuator, so as to effect at least one predetermined response during said predefined second time interval, utilising said predicted motion model and at least one predicted performance parameter of said at least one first actuator;

(g) determining a first correction factor from differences between said motion data and said predicted motion model, and a second correction factor from differences between said at least one performance parameter and said at least one predicted performance parameter,

(h) repeating steps (a) to (g) for each subsequent time interval utilising said first correction factor and said second correction factor,

whereby said at least one second sensor comprises any one or all of a load cell or load sensor, a torque sensor, a speed sensor, an accelerometer, and an absolute or relative position sensor, and wherein said relative position sensor is any one of an encoder, slide-wire potentiometer, resolver, proximity sensors, and a Linear Variable Differential Transformer (LVDT).

The method of the present invention provides the advantage of a standardised solution that is suitable for all, or at least a majority of motion compensation systems and associated equipment. In particular, the method of the present invention is adaptable and configurable to any type of actuators, such as, rotary-, linear- and hybrid actuators, often used in offshore motion compensation. Typical examples are winches, cylinders and 'nodding donkeys', which may be powered hydraulically, pneumatically or electrically (e.g. electric motor). Furthermore, the method of the present invention can be configured to control respective actuators to compensate for any motion in up to six degrees of freedom (DOF). Examples may be a single-axis heave compensation for lifting devices such as cranes, winches and linear compensators, but also multi-axis platform stabilisation for pitch-, roll-, heave-, surge-, sway- and/or yaw-motion. The adaptability to different types of actuators and the ability to process and consider information from external sensors advantageously allows for automatic adaptation and modification to a particular environment and/or motion control system, as well as, a particular application. In addition, the method provides the advantage of optimising the motion control system response to changing system dynamics and/or any external interference. Moreover, including at least one dynamic performance parameter(s) of an actuator, when generating the control algorithm that effects the predetermined response (e.g. moving a load from a first suspended point to a precise subsea location), provides the advantage of substantially improved accuracy of the load-controlling and motion-compensating actuator(s). Also, the inclusion of the dynamic performance parameter(s) provides a method that allows the motion control system to "learn" (i.e. adapt to) the current process characteristics and limitations of the actuator(s).

Advantageously, the method may further comprise a simulation step (s1) selectively executable prior to step (b) and adapted to generate a simulated response of said load, utilising at least one simulated geometric characteristic, a simulated predicted motion model and at least one simulated performance parameter. Even more advantageously, the method may further comprise a second simulation step (s2) selectively executable subsequent to step (f) and adapted to generate a simulated response of said load, utilising said at least one geometric characteristic, said predicted motion model and said at least one predicted performance parameter. This provides the advantage that an operator can simulate the performance of the motion compensation system in order to predict the accuracy of the motion stabilisation prior to activating any one of the available control modes (e.g. Active Heave Compensation - AHC, Constant Tension - CT, Active Heave & Constant Tension - AHCT).

Advantageously, said at least one performance parameter may be a deviation of an actual performance parameter measured at said predefined first time interval from a predefined standard performance parameter of said at least one first actuator. Preferably, said at least one performance parameter may comprise any one or all of an inertia, a speed, an acceleration, a position of said at least one first actuator, and/or a coupling force acting between said load and said at least one first actuator, and/or a response time of said at least one first actuator to an actuating signal.

This provides the advantage of a significantly improved control of the actuator(s) by taking into account the limitation of the actuator(s) when generating the control algorithm. In particular, instead of simply using the predefined standard performance parameters of the actuator(s) provided by the manufacturer, the actual performance parameter is determined for a predefined time interval and the deviation from the standard performance parameter is utilised when generating the control algorithm, thus a more accurate control of the actuator is achieved. For example, instead of using a standard acceleration, speed, inertia or position of a winch at a given time, the actual acceleration, speed, inertia or position is determined and the deviation is used to generate the control algorithm that accurately predicts the actuators' response. The deviation from the provided standard may be caused by the variable change of the winch weight when paying out the wire (i.e. variable inertia), or from delays or lags due to, for example, a differing hydraulic valve response time, fluid transportation delays, for example, caused by long pipe runs and differing oil viscosity and/or compressibility. Advantageously, said at least one predetermined response may selectively comprise any one or all of (i) positioning said load on at least one point of a predetermined trajectory in relation to said first reference point and/or said second reference point, and (ii) maintaining a predefined coupling force between said load and said at least one first actuator. Preferably, said motion data may comprise any one or any combination of a pitch movement, roll movement, heave movement, yaw movement, sway movement and surge movement of the vessel relative to said first reference point. Even more preferably, said first reference point may be a fixed location on the earth's surface and said second reference point may be a load suspension point fixed to the moving vessel. Advantageously, said at least one first sensor may comprise at least one positional sensor operatively coupled to the moving vessel. Typically, said at least one positional sensor may comprise any one or any combination of a Motion Reference Unit (MRU), an Inertial Measurement Unit (IMU), at least one accelerometer, at least one gyroscope, at least one magnetometer and a Global Positioning System (GPS).

Advantageously, said at least one first sensor and said at least one second sensor may comprise a wireless transceiver. This provides the advantage of a wireless connection, allowing the sensor(s) to be placed at the most suitable locations.

Advantageously, said at least one first actuator may comprise any one or all of a rotary actuator, a linear actuator and a hybrid linear/rotary actuator, each adapted to move said load from a first position to at least one second position.

Preferably, said control algorithm may be adapted to simultaneously control a plurality of actuators.

According to a second embodiment of the invention, there is provided an adaptive controller operatively coupleable to at least one first actuator and/or at least one sensor, and that is adapted to execute a method according to the first aspect of the present invention. Advantageously, said at least one first sensor may comprise at least one positional sensor. Alternatively, said positional sensor and said adaptive controller may be operatively combined in a single unit. Typically, said positional sensor may comprise any one or any combination of a Motion Reference Unit (MRU), an Inertial Measurement Unit (IMU), at least one accelerometer, at least one gyroscope, at least one magnetometer and a Global Positioning System (GPS).

According to a third embodiment not covered by the scope of protection of the invention, there is provided an adaptive motion compensation system comprising:

at least one actuator adapted to control the position and or predetermined trajectory of a load relative to a first reference point and/or a second reference point;
at least one first sensor, adapted to determine motion data of a moving vessel in at least one Degree of Freedom (DOF);
at least one second sensor, adapted to determine at least one performance parameter of said at least one actuator;
an adaptive controller, operatively coupleable to said at least one actuator, said at least one first sensor and said at least one second sensor, and adapted to execute a method according to the first embodiment of the present invention.

According to a fourth embodiment of the invention, there is provided a computer-readable storage medium having embodied thereon a computer program, when executed by a computer processor, that is configured to perform the method of the first embodiment of the invention.

## Brief Description of the Drawings

Preferred embodiments of the present invention will now be described, by way of example only and not in any limitative sense, with reference to the accompanying drawings, in which:

**Figure 1** illustrates a schematic example of (a) a passive motion control system and (b) an active control system on an offshore vessel;
**Figure 2** shows an illustration of the roll (x), pitch (y) and heave (z) axes, as well as, available six degrees of freedom (DOF);
**Figure 3** illustrates a systematic flowchart of a first embodiment of the method of the present invention, i.e. not including the simulation steps;
**Figure 4** illustrates a systematic flowchart of a second embodiment of the method of the present invention, i.e. including selective simulation steps;

**Figure 5** shows block diagram of an example internal structure of an algorithm kernel suitable for executing the method of the present invention;

**Figure 6** shows (a) a top-view and (b) a side-view of an illustration of a vessel and crane and example location of two MRU's relative to the crane's centre of rotation (x, y) and relative to the vertical position of the crane on the vessel (z);

**Figure 7** shows a side view of a simplified 2D illustration of a universal crane model suitable for different types of cranes, the controller system selectively receives the crane properties from an external sensor or as a constant parameter, which may be the slew-, luff- or knuckle angle, and/or boom extension;

**Figure 8** shows an illustration of a rotary drum and respective winch rope, also illustrating the winch-rope packing coefficient;

**Figure 9** shows an illustration of a typical linear compensator in form of a cylinder;

**Figure 10** shows a simplified function diagram and interfaces of the controller (CPU, AHC module) and respective actuator / sensor (winch, load cell(s), LDVT, encoder, MRU) with no redundancy of AHC and sensors;

**Figure 11** shows a simplified function diagram and interfaces of the controller (CPU, AHC module) and respective actuator / sensor (winch, load cell(s), LDVT, encoder, MRU) with redundant sensors;

**Figure 12** shows a simplified function diagram and interfaces of the controller (CPU, AHC module) and respective actuator / sensor (winch, load cell(s), LDVT, encoder, MRU) with redundant AHC / CT and sensors;

**Figure 13** shows a heave waveform with a heave amplitude of 3.5m and heave period T = 14 sec and resulting hook heave when the winch PID is actuated;

**Figure 14** shows observed results for an example waveform comparing (a) MRU amplitude and measured heave and (b) the resulting position error, as well as, (c) winch position and respective speed setpoints.

**Figure 15** shows observed results for an example waveform of (a) the winch / sea error with added pure delay of 150ms, and (b) winch position and respective speed setpoints with added pure delay of 150ms;

**Figure 16** shows observed results for an example waveform of (a) the winch / sea error with winch gain, and (b) winch position and respective speed setpoints with winch gain;

**Figure 17** shows observed results for an example waveform of (a) the winch / sea error with winch acceleration/deceleration ramps, and (b) winch position and respective speed setpoints with winch acceleration/deceleration ramps;

**Figure 18** shows an example of the software structure and Human-Machine Interface (HMI) allowing changing the whole configuration from the HMI;

**Figure 19** shows examples of (a) a graphical user interface (GUI) Main screen and (b) an Alarm screen, and

**Figure 20** shows examples of the graphical user interface of the System Graphs Screens (a) vessel/hook movement and (b) power/hook.

## Detailed description of the preferred embodiment(s)

The exemplary embodiments of this invention will be described in relation to marine and offshore motion compensation during load handling. However, it should be appreciated that, in general, the method and controller of this invention will work equally well for any other suitable motion compensation system.

For purposes of explanation, it should be appreciated that the terms *'determine', 'calculate'* and *'compute',* and variations thereof, as used herein are used interchangeably and include any type of methodology, process, mathematical operation or technique, including those performed by a computer system. The terms *'generating'* and *'adapting'* are also used interchangeably describing any type of computer modelling technique suitable for control theory applications. In addition, the terms *'vertical'* and *'horizontal'* refer to the angular orientation with respect to the surface of the earth, i.e. the heave motion of a vessel may be *'vertical',* i.e. substantially perpendicular to the general orientation of the ground surface of the earth (assuming the surface is substantially flat), or the swaying / surging motion may be *'horizontal',* i.e. substantially parallel to the general orientation of the ground surface of the earth. The terms *'hoisting device', 'actuator', 'winch', 'cylinder'* may be used interchangeably to include any actuator suitable for controlling loads operably coupled to the actuator via a rope.

In addition, the term *'plant'* is understood with respect to the control theory, and is the combination of a process and actuator. In particular, a plant is often referred to with a transfer function, which indicates the relation between an input signal and the output signal of a system without feedback, commonly determined by physical properties of the system. An example would be an actuator with its transfer of the input of the actuator to its physical displacement. In a system with feedback, the plant still has the same transfer function, but a control unit and a feedback loop (with their respective transfer functions) are added to the system.

Furthermore, the possible six degrees of freedom (DOF) of a vessel are illustrated in Figure 2 with reference axes X, Y and Z, wherein *'pitch'* motion is a rotating vessel motion about the Y-axis, *'roll'* motion is rotating vessel motion about the X-axis, *'yaw'* motion is a rotating vessel motion about the Z-axis, '*heave*' motion is a linear vessel motion along the Z-axis, 'sway' motion is a linear vessel motion along the Y-axis, and *'surge'* motion is a linear vessel motion along the X-axis.

Figure 3 shows a simplistic flowchart describing the basic principle behind the method of the present invention as it may be utilised with any suitable controller (not shown) that is adapted to operatively interact with respective actuators 16 and/or sensors of a crane module 22 that is installed, for example, on a vessel 10. In step (a) of the method, motion data is obtained from at least one suitable positional sensor, such as, for example, a Motion Reference Unit (MRU) 24, an Inertial Measurement Unit (IMU), accelerometer(s), gyroscope, magnetometer and/or GPS, preferable in relation to the earth's surface (seabed). Geometric parameters of the actuator(s) 16 and crane module 22, as well as, respective positions on the vessel 10 may be entered manually or provided by external sensors in step (b).

In step (c), the performance parameter of the actuator(s) 16 is then determined by comparing the actual performance to an expected performance. For example, the changing inertia of the drum paying out the rope or any unforeseen hydraulic delays may be the cause of a changing performance of the actuator(s) 16, so that the actuator(s) 16 response to the controller's demand may be affected. Thus, the actuator(s) 16 may not be able to provide the expected performance in speed, acceleration/deceleration and/or actuator position that allows positioning a load 12 at a precise point in space and time. The determined performance parameter now takes into account the actual difference from the expected performance and the controller can compensate for any dynamic performance changes.

In step (d) and (e), a starting position of the load 12 is determined and a motion model of the moving vessel 10 is generated for a subsequent time interval $\lambda$. The data from steps (a) to (d) is then processed by the controller to provide a control algorithm for the next time interval $\lambda$ capable of either moving a load on a precise path, maintaining a position of a load in space and/or maintaining a force acting on a load within the predetermined time interval $\lambda$. Correction factors for the motion model and performance parameter are then determined in a step (g) to be considered in steps (a) to (f) for the next subsequent time interval $\lambda$.

Figure 4 shows a simplistic flow chart of an alternative method of the present invention including selective simulation step (s1) and/or step (s2). The simulation steps (s1) and (s2) may be used to simulate the system behaviour prior to any motion control mode selection, in order to anticipate the system's performance before actuating the actuator(s) 16.

A practical example of the method is now described for motion compensation in offshore lifting applications.

It is understood by the person skilled in the art that the method of the present invention presents a high degree of generality in the sense that it can be applied to a wide variety of offshore lifting applications, including those equipped with actuator(s) 16 with one, three and six DOFs, wherein the actuator(s) 16 may be rotary or linear (e.g. winch, cylinder).

The control algorithm's implementation may be structured so that some sensor and actuator 16 characteristics, such as their multiplicity, are handled inside an *'outer control layer',* whereas the strictly control-related functionality is confined inside an *'inner kernel'.* The project-specific characteristics, handled inside the control algorithm's *'outer layer',* are configured by the user in a per-project fashion, wherein the algorithm in the *'inner kernel'* remains unchanged for different applications / projects.

*Hoisting controller (i.e. actuator controller)*

An example of the control algorithm kernel's internal structure is depicted in Figure 5. There are two closed-loop controllers within that algorithm, namely the *Motion Control (MC)* hoisting device (actuator 16) controller and the *Constant Tension (CT)* hoisting device (actuator 16) controller. In order for the control algorithm to be generic (i.e. universally applicable), it must be able to cope with differing hoisting device (actuator 16) dynamics, including possible delays up to a predetermined extent. Furthermore, changing drum inertia while paying out or reeling in a rope is a typical example of the time-varying dynamics the hoisting device controller may have to deal with. Other nonlinearity's may be caused by delayed valve action (e.g. cylinder actuators) from. For example, oil compression effects.

Thus, in order to compensate for such time-varying hoisting device dynamics, the method of the present invention continuously adapts its mathematical models generated for the hoisting devices (actuators 16) in accordance with the observed performance at that instant in time. The ability to determine and incorporate a performance parameter (i.e. a deviation from an expected norm) of the actuator(s) 16 enables the control algorithm to adapt to initially unknown hoisting devices (actuators 16) in the shortest possible time frame.

This hoisting device adaptation is purely based on the hoisting device input and output (I/O) data, i.e. the hoisting device commands, whether they are generated by the method of the present invention or not, as well as, the hoisting device output measurements, provided, for example, by a particular set of sensors, such as encoders or Linear Variable Differential Transformer (LVDT).

Consequently, the hoisting device output sensor signal sequences caused by a given hoisting device command sequence can be estimated for predetermined time intervals $\lambda$. If the command sequence can be effectively applied to the plant, then the observed differences between the estimated outputs and the measured outputs can be used to improve the corresponding controller's mathematical model of the hoisting device (actuator 16) by means of adaptation, resulting in an improved and much more accurate model.

Thus, the adaptation of the control algorithm is crucial in environments with time-varying parameters or in the absence of any detailed previous knowledge of the process and or system controlled with the method of the present invention.

*Example of an Active Heave Compensation (AHC) method*

Active Heave Compensation (AHC) is a particular case of Motion Control (MC) and it is understood by the person skilled in the art that the method of the present invention can be used with any MC in any one or any combination of the possible six DOFs.

When used with AHC, the main goal is to provide the hoisting device actuators 16 with the appropriate commands (control algorithm) so that, for example, the vertical movement of the hook (i.e. the load suspension point) is minimised.

The AHC control strategy combines open-loop and closed-loop control. In particular, the hook heave (vertical hook movement) is estimated from the provided crane 22 and hoisting actuator 16 geometries and from the hoisting actuator 16 position measurement (see Figure 6 (a) and (b): x1, y1 and x2, y2, as well as, h1 and h2). Figure 7 shows an example of a universal crane module 22, its geometry and potential sensor outputs that may be used for all different types of cranes. The hook heave is controlled in an open loop fashion by the hoisting device position (e.g. winch position), which in turn, is controlled by the actuator 16 (i.e. winch) receiving the required commands (control algorithm) and reading corresponding position feedback (i.e. in a closed-loop). Figure 13, for example, shows measurement results of the vertical movement of a hook when the heave (Amplitude: 3.5m, T = 14 sec) is compensated by a PID controlled winch.

As shown in the block diagram of Figure 5, responsible for the AHC is:

- the *Vessel motion* prediction block, which generates a predicted vessel crane tip heave motion for a predefined time interval λ from the latest MRU measurements;
- the *Setpoint generator,* which generates, from the predefined time interval λ long future vessel crane tip heave prediction, a predefined time interval λ long hoisting device position setpoint describing a desired trajectory for the hoisting device position variable;
- the *Predictive controller MC* block, which calculates the hoisting device command required to meet the desired hoisting position trajectory during the next predefined time interval λ from the previously mentioned setpoint and from the measured hoisting device position;
- the *Adaptive mechanism* block, which produces a non-linear process model used by both predictive controllers as well as by the *Simulation* block.

*Motion control (MC) method*

The MC method for a particular part of the system, which can be controlled by means of a set of actuators 16, and whose position can be read by means of a set of sensors (not shown), can be viewed as a generalisation of the AHC method. For the method of the present invention, Multi-Input / Multi-Output (MIMO) predictive controllers may be required.

*Constant Tension (CT) method*

CT’s goal is to provide the hoisting device actuators with the appropriate commands (control algorithm) so that the tension on the rope (or a force acting on the rope-suspended load 12) is maintained at a constant setpoint value (i.e. a predefined force).

As shown in Figure 5, the blocks responsible for the CT are:

- the *Predictive controller CT* block, which calculates the hoisting device command (control algorithm) required to meet the desired load measured at the load cell sensor during the next predefined time interval λ, from its setpoint and from the measured load cells;
- the *Adaptive mechanism* block, which produces a non-linear process model used by both predictive controllers, as well as, by the *Simulation* block.

*Hybrid Active Heave Compensation Constant Tension (AHCT) method*

The Active Heave & Constant Tension (AHCT) method is a combination of the AHC and CT methods. The control objective in this case is to provide the hoisting device (actuator 16) with the appropriate signals (control algorithm), so that AHC is achieved provided a minimum tension is always present on the rope. This mode of operation is meant to prevent rope slack during AHC operation, which may result in a dangerous operation either for people or for equipment.

As shown in Figure 5, AHCT mode is achieved at the *Switching block,* where the output is calculated as a combination of both AH and CT.

*Simulation mode*

As mentioned previously, an additional feature of the method of the present invention is a selective simulation step (s1), (s2) for simulating the system's behaviour prior to any motion control mode selection, in order to anticipate the system's performance.
When the system is operated in simulation mode, the control actions coming from the *Switching block* are not applied to the *Plant* (i.e. combination of process and actuator(s)), but only to the *Simulation* block, where the simulated plant outputs are generated.
The control blocks illustrated in Figure 5 are now each described in detail.

**Vessel motion:**

Every DOF in the vessel movement that is required for a particular application is predicted independently as explained below.
The prediction of a movement variable at instant k, h(k), is computed by an adaptive linear model of the form:

$$\mathrm{h(k)} = \sum_{i=1}^{n} a_i\,(k) h(k-i) \qquad (1)$$

where coefficients $a_i(k)$ are adapted online, tracking the sea motion and vessel dynamics. Previous heave values *h(k-i)* needed for the calculation are obtained from previous MRU 24 measurements.
The vessel motion prediction errors at a given instant can be calculated from the current MRU 24 measurements and the corresponding predictions previously made with equation (1). The errors are used to adapt the coefficients $a_i(k)$ with the objective of improving the accuracy of the models. The algorithm used for the adaptation is described in Appendix A1.
On every algorithm iteration the *Vessel motion* prediction block calculates vessel motion predictions over a future predefined time interval prediction horizon. This multi-point prediction is then used by the hoisting device position *Setpoint generator* block.

**Setpoint generator:**

This block computes the required hoisting device position evolution for the next predefined time interval (e.g. $\lambda_i$), which is then passed to the *Predictive controller* block(s) as a multi-point future setpoint. This multi-point setpoint is calculated from the multi-point vessel motion prediction described under **'Vessel motion'** above. The calculation takes into account all the required geometries and positions. The actuator position controller prediction horizon length equals the vessel motion prediction algorithm horizon length λ.

**Predictive controller CT, MC:**

As stated above, the predictive controllers used in this project can be MIMO controllers in some applications, but for the sake of simplicity, the explanation below considers Single Input - Single Output (SISO) controllers.
In particular, the predictive controller block considers a process model of the form:

$$y(k) = \sum_{i=1}^{n} a_i y(k-i) + \sum_{i=1}^{m} b_i u(k-i) \qquad (2)$$

where *y(k)* is the process output at instant *k* and *u(k)* is the process input at instant k, and where k an integer.
The control algorithm predicts the process output over a finite horizon of time interval λ and, among the infinite set of possible λ-long future process input sequences, the control algorithm chooses the one that minimises the index:

$$J_k = \frac{1}{2}\sum_{j=1}^{\lambda} Q_j [\hat{y}(k+k)|k) - y_r(k+j|k)]^2 + \frac{1}{2}\sum_{j=0}^{\lambda-1} R_j \hat{u}\,(k+j|k)^2 \qquad (3)$$

where $\hat{y}(k+j|k)$ is the prediction of *y(k + j)* calculated in *k,* $y_r$ is a future desired process output trajectory and $Q_j$ and $R_j$ are constant weight arrays.

In order to minimise the index in equation (3) with respect to:

$$\hat{U} = \{\hat{u}(k|k), \hat{u}(k+1|k) \ldots \hat{u}(k+\lambda-1|k)\} \quad (4)$$

The predictions $\hat{u}(k+j|k)$ must be first eliminated. This is done by recursively using equation (2) in (3). After doing that, the minimum is easily found by:

$$\frac{\partial J_k}{\partial \hat{U}} = 0 \quad (5)$$

This solution provides a control sequence including the next time intervals A control actions. At each instant, the first control action of $\hat{U}$ is applied to the process and, after a control period, the whole calculations are being repeated. This means that, even if the controller calculates a plan compatible with successfully controlling the process during the next time intervals A, only the first action of that plan is effectively used.

Arrays $Q_j$ and $R_j$ enable the user to balance the controller from a very demanding control action and tight control performance - high Q/s and low $R_j$*'s* - to a very conservative control action and loose control performance - low $Q_j$*'s* and high $R_j$*'s.* Individual elements of these arrays can have different values if desired.

**Adaptive mechanism:**

Since any motion control performance is strongly affected by the hoisting device torque and power capacity, and since these variables inevitably saturate at certain levels, the mathematical description (i.e. model) used by the control and simulation algorithms, has been chosen to be nonlinear.

n Figure 5 the plant is shown as a block with a single input, the hoisting device speed command, and two outputs, namely the hoisting device position feedback and the current torque. Inputs and outputs may be vectors, depending on the particular application. Most frequently, the relationship between the input and the output in a real plant of this kind is highly nonlinear, due to device torque and power limitations.

Consequently, the algorithm inside this block has been designed to consider such nonlinearities (e.g. varying inertia, speed, position) when making plant output predictions.

For example, the adaptive method of the present invention may utilise Artificial Neural Network (ANN) to adapt to a nonlinear system. ANN is a family of learning algorithms inspired by biological neural networks that can be used to estimate or approximate generally unknown arbitrary functions from observed data. ANN's are well known in the art and not discussed in any more detail.

In this particular example of the method of the present invention, an ANN interface has been chosen so that it considers a set of inputs in the form of *[y(k-1)y(k-2)...y(k-n)u(k-1)u(k-2)...u(k-m)w(k-m)w(k-2)...w(k-q)],* and a single output *y(k),* wherein *u(k), w(k)* and *y(k)* are the hoisting device speed and torque commands and the hoisting device position feedback, respectively.

Therefore, on every execution, the ANN generates a simulated hoisting device position feedback. If the network is run in a learning mode, this output is compared to the process measured value and the difference, or error, is used to adapt the network. If the network is used in simulation mode, there is usually no measured value available, so the adaptation is disabled.

**Switching block:**

The switching block is in charge of selecting the appropriate action, which is to be sent to both the plant and the simulation block. The action depends on the selected operation mode. For example, if the selected mode is MC, then the action will equal the output of the MC hoisting device *predictive controller MC,* whereas, if the selected mode is CT, then the action will equal the output of the CT hoisting device *predictive controller CT.* However, when the selected mode is AHCT, the output from the switching block is determined from both, predictive controller MC and CT outputs.

**Simulation block:**

The *Simulation block* may contain an up-to-date copy of the ANN model generated by the *Adaptive mechanism* block, so that it can be run in order to find out what the expected process behaviour would be given a set of hypothetical inputs.

The simulation enables a user to estimate the system behaviour in a predetermined mode and/or conditions prior to actually entering that mode.

*Example sequence of operation:*

The example of a sequence of operations, when the system is operated in one of its automatic modes, such as, MC (including AHC), CT or AHCT, may be as follows:

(i) Within the *Vessel motion* prediction block:

(a) Calculate the estimation errors from current MRU measurements and previous estimations;
(b) Use the estimation errors to adapt corresponding motion model coefficients used in equation (1).
(c) With the newly adapted motion model, predict the vessel positions for the next time interval A based on the required DOF.
(d) With the predicted vessel positions, calculate the vessel positions (point of interest) for the next time interval A, taking into account the geometry of the particular application.

(ii) Calculate, from the predicted vessel crane tip predictions (see step (d)), the corresponding hoisting device position of the desired trajectory for the next time interval $\lambda$.

(iii) Within the *Adaptive mechanism* block:

(a) Calculate the expected current hoisting device position from the latest hoisting device actuator setpoint and device torque, using the nonlinear plant model;
(b) Compare the expected current hoisting device position with the measured current hoisting device position and use the difference (performance parameter) to adapt the plant non-linear model parameters.

(iv) Execute the predictive controllers, making use of the newly adapted plant model, in order to generate updated hoisting device commands (updated control algorithm).

(v) Calculate the appropriate output of the switching block, depending on its inputs and its operation mode.

(vi) Depending on whether the selected mode is *Auto-mode* (MC, CT, AHCT) or *Simulation:*

- Auto-mode: Send the command to the hoisting actuator (e.g. winch) and wait for the new sample time.
- Simulation mode: Execute the process simulation, using the newly generated hoisting device command (control algorithm) as its input to generate a simulated hoisting device feedback; then, the simulated hoisting device feedback is converted into an expected control behaviour, utilising the appropriate geometry transformations.

(vii) This sequence is repeated for every predetermined time interval $\lambda$.

*Following are practical considerations when implementing the method, controller and/or system of the present invention on a vessel 10 with load lifting capabilities:*

As shown in Figure 6, the MRU 24 may be placed in a protected location at a convenient point that is as close to the desired point of heave measurement as practical. However, positioning of the MRU 24 on, for example, crane boom tips and similar locations exposed to environmental influences and vibration should be avoided.
The implemented system shall have the facility to interface with and interpret the motion data from the MRU 24. A preferred MRU 24 may be the SMC-IMU-108 device.
When used with cranes 22, the system may be adapted to interface with external positional sensors (e.g. encoders) that are fitted to the crane 22. The positional sensors may be adapted to determine the crane boom tip position dynamically and relative to a fixed MRU 24 position. This will allow relating the heave measurements made at the remote MRU 24 location to the actual crane boom tip heave.
For applications with a fixed over boarding point, such as a deck winch and A-frame, the system may be adapted to input fixed geometrical data and offsets from a remote MRU 24 location to the point at which the heave information is required.
The calculation of heave at the wire over boarding point may be based on the motion data from the MRU 24 and the geometry, as well as, the relative position of the boom tip (crane 22) or over boarding sheave (deck winch) from the MRU 24 location.
Figure 8 shows an illustration of a typical winch (actuator 16) and how the rope/wire 26 is packed onto the drum 28. Figure 9 shows an illustration of a typical pneumatic or hydraulic cylinder 30, a plurality of position warning switches 32 for plunger position and the initial middle position 34 when starting the AHC.

The operation and visualisation of the system may be via suitable operator controls and/or touch screen HMI (Human-Machine-Interface) allowing an operator to interface with and configure the system. Typical GUIs are illustrated in Figures 19 and 20.

A SCADA (Supervisory Control and Data Acquisition) style presentation may be provided to allow the operator to interface with the system. This will comprise screens with mimic diagrams and graphics to provide a schematic representation of system operation and status.

At the User Interface, during the Simulate/Standby mode, a graphical representation of the vessel induced load movement with AHC not activated may be displayed and superimposed with a graphical representation of a simulated load motion that would be produced if AHC were to be activated. This provides the operator with an illustration of the predicted AHC performance in a current sea state and including any limitations on AHC performance imposed by a winch's dynamic response or by compensation cylinder travel limitations (e.g. saturation). Also, in case the weather conditions are such that the actual simulated compensation performance is outside an allowable synchronisation or saturation limit, an interlock may be activated to prevent the operator from activating the AHC.

The system may further be adapted to interface with a range of third party equipment, control systems and other suitable hardware.

In some cases, the system may be adapted to indirectly interface with the actuator 16 via an existing or a new third party control system. Interfacing with third party systems may generally be implemented in hardware using voltage free (i.e. dry) contacts for digital I/O and optically isolated analogue signals such as 4-20mA, 0-10V, ±10V. All hardware interfacing between systems may be galvanically isolated to avoid ground loops and common mode currents. Thus, the system may be adapted to enable interfacing by the most common forms of proprietary fieldbus protocols, e.g. Profibus, Modbus, CAN Bus, Profinet, Ethercat and any other suitable fieldbus protocols.

In other cases, the system may be adapted to directly interface with the actuator hardware, for example, hydraulic proportional valves or variable speed electric drives.

The requested movement may be verified with the actual movement (synchronisation) to ensure that the actuator 16 is responding correctly and follows the control system demand. An incorrect or lack of response may be due to changing weather conditions preventing the system to follow the demand, saturation or system failure. For cylinder-based systems, saturation (i.e. end of travel) detection and protection may be provided to prevent the cylinder (actuator 16) reaching its mechanical end of travel.

When the actual movement does not accurately follow the control system demand and falls outside of a pre-set wire length or a cylinder displacement first stage differential high-limit, an alarm may be generated. This warns the operator so that the system can be brought to a safe stop. When a second stage differential high-limit (set above the first stage) is reached, AHC operation may be automatically disabled.

The alarm may be audible and/or visual.

Optionally, the system may allow data logging and/or remote access. In particular, the data logging means may automatically store all system variables onto non-volatile removable storage media at a suitable sample rate so as to provide sufficient resolution to represent the system accurately during investigations and fault finding.

The remote access may be over the vessel's V-SAT connection and network to enable remote interrogation and fault finding.

Figures 10, 11 and 12 show different examples of a simplified function diagram and the interfaces of the controller (CPU, AHC module) and respective actuator / sensor (winch, load cell(s), LDVT, encoder, MRU), either with no redundancy of AHC and sensors (Figure 10), with redundant sensors (Figure 11) or with redundant AHC / CT and sensors (Figure 12).

Figures 14, 15, 16, 17 show example outputs of the system during AHC. Figure 18 is an example of a possible software structure and Human-Machine Interface (HMI) that allows changing the whole configuration from the HMI

It will be appreciated by persons skilled in the art that the above embodiment has been described by way of example only and not in any limitative sense, and that various alterations and modifications are possible without departing from the scope of the invention as defined by the appended claims.

APPENDIX (A1)

**Mathematical descriptions**

*Projection algorithm*

The projection algorithm has been used to adapt the model coefficients in equation (1) when the measured value of $h$, $h_m$ differs from the one yielded by the equation.

Equation (1) can be written in its compact form:

$$h(k) = \Theta\phi^T \quad (6)$$

where $\Theta = [a_1 a_2 ... a_n]$ and $\varphi = [h(k - 1)h(k - 2)...h(k - n)]$.

The projection algorithm finds a new $\Theta$ from the existing $\Theta_0$, so that the new $\Theta$ is the nearest possible model coefficients set from $\Theta_0$ that satisfies the equation:

$$h_m(k) = \Theta\phi^T \quad (7)$$

To do so, the quadratic distance function:

$$d^2 = (\Theta - \Theta_0)^2 \quad (8)$$

has to be minimised, with the condition:

$$h_m = \Theta\phi^T \quad (9)$$

The solution can be found by setting a Lagrange multipliers problem:

$$2(\Theta - \Theta_0) = \lambda\phi, \quad \Theta = \frac{\lambda}{2}\phi + \Theta_0 \quad (10)$$

and:

$$h_m = \frac{\lambda}{2}\phi\phi^T; \frac{\lambda}{2} = \frac{h_m - \Theta_0\phi^T}{\phi\phi^T} \quad (11)$$

the solution results:

$$\Theta = \frac{(h_m - \Theta_0\phi^T)\phi}{\phi\phi^T} + \Theta_0 \quad (12)$$

where the denominator must be protected by adding a small positive constant value. The fractional term in equation (12) can be multiplied by a positive number (lower than one), in order to improve adaptation robustness in noisy environments.

## Claims

1. A method for adaptive motion compensation of a load controlled by at least one first actuator (16) on a moving vessel (10), comprising the steps of:

   (a) obtaining motion data of the moving vessel for a predefined first time interval in at least one first Degree of Freedom (DOF) relative to a first reference point from at least one first sensor;
   (b) providing at least one geometric characteristic of said at least one first actuator in relation to a second reference point on the moving vessel;
   (c) determining at least one performance parameter of said at least one first actuator for said predefined first time interval utilising at least one second sensor;
   (d) determining an initial position of said load in relation to said first reference point and/or said second reference point;
   (e) generating a predicted motion model of the moving vessel for a predefined second time interval, subsequent to said predefined first time interval, from said motion data;
   (f) generating a control algorithm adapted to control said at least one first actuator, so as to effect at least one predetermined response during said predefined second time interval, utilising said predicted motion model and at least one predicted performance parameter of said at least one first actuator;
(g) determining a first correction factor from differences between said motion data and said predicted motion model, and a second correction factor from differences between said at least one performance parameter and said at least one predicted performance parameter,
(h) repeating steps (a) to (g) for each subsequent time interval utilising said first correction factor and said second correction factor,

**characterised in that** said at least one second sensor comprises any one or all of a load cell or load sensor, a torque sensor, a speed sensor, an accelerometer and an absolute or relative position sensor, and wherein said relative position sensor is any one of an encoder, slide-wire potentiometer, resolver, proximity sensor and a Linear Variable Differential Transformer (LVDT).

**2.** A method according to claim 1, further comprising a simulation step (s1) selectively executable prior to step (b) and adapted to generate a simulated response of said load, utilising at least one simulated geometric characteristic, a simulated predicted motion model and at least one simulated performance parameter.

**3.** A method according to any one of the preceding claims, further comprising a second simulation step (s2) selectively executable subsequent to step (f) and adapted to generate a simulated response of said load, utilising said at least one geometric characteristic, said predicted motion model and said at least one predicted performance parameter.

**4.** A method according to any one of the preceding claims, wherein said at least one performance parameter is a deviation of an actual performance parameter measured at said predefined first time interval from a predefined standard performance parameter of said at least one first actuator.

**5.** A method according to claim 4, wherein said at least one performance parameter comprises any one or all of an inertia, a speed, an acceleration, a position of said at least one first actuator, and/or a coupling force acting between said load and said at least one first actuator, and/or a response time of said at least one first actuator to an actuating signal.

**6.** A method according to any one of the preceding claims, wherein said at least one predetermined response selectively comprises any one or all of (i) positioning said load on at least one point of a predetermined trajectory in relation to said first reference point and/or said second reference point, and (ii) maintaining a predefined coupling force between said load and said at least one first actuator.

**7.** A method according to any one of the preceding claims, wherein said motion data comprises any one or any combination of a pitch movement, roll movement, heave movement, yaw movement, sway movement and surge movement of the vessel relative to said first reference point.

**8.** A method according to any one of the preceding claims, wherein said first reference point is a fixed location on the earth’s surface (20) and wherein said second reference point is a load suspension point fixed to the moving vessel (10).

**9.** A method according to any one of the preceding claims, wherein said at least one first sensor comprises at least one positional sensor operatively coupleable to the moving vessel and that comprising any one or any combination of a Motion Reference Unit (MRU) (24), an Inertial Measurement Unit (IMU), at least one accelerometer, at least one gyroscope, at least one magnetometer and a Global Positioning System (GPS).

**10.** A method according to any one of the preceding claims, wherein said at least one first sensor and said at least one second sensor comprise a wireless transceiver.

**11.** A method according to any one of the preceding claims, wherein said at least one first actuator comprises any one or all of a rotary actuator, a linear actuator and a hybrid linear/rotary actuator, each adapted to move said load from a first position to at least one second position.

**12.** An adaptive controller operatively coupleable to at least one first actuator and/or at least one first sensor, adapted to execute a method according to any one of claims 1 to 11.

**13.** An adaptive controller according to claim 12, wherein said at least one first sensor comprises at least one positional sensor, and wherein said positional sensor and said adaptive controller are operatively combined in a single unit.

**14.** An adaptive controller according to claim 13, wherein said positional sensor comprises any one or any combination of a Motion Reference Unit (MRU), an Inertial Measurement Unit (IMU), at least one accelerometer, at least one gyroscope, at least one magnetometer and a Global Positioning System (GPS).

**15.** A computer-readable storage medium having embodied thereon a computer program configured to perform the method of any one of claims 1 to 11 when executed by a computer processor.

**Patentansprüche**

**1.** Ein Verfahren zur adaptiven Bewegungskompensation einer Last, die von mindestens einem ersten Aktuator (16) auf einem sich bewegenden Fahrzeug (10) gesteuert wird, beinhaltend die folgenden Schritte:

(a) Erhalten von Bewegungsdaten des sich bewegenden Fahrzeugs für ein vordefiniertes erstes Zeitintervall in mindestens einem ersten Freiheitsgrad (DOF = Degree of Freedom) relativ zu einem ersten Bezugspunkt von mindestens einem ersten Sensor;
(b) Bereitstellen mindestens einer geometrischen Eigenschaft des mindestens einen ersten Aktuators in Relation zu einem zweiten Bezugspunkt auf dem sich bewegenden Fahrzeug;
(c) Bestimmen mindestens eines Leistungsparameters des mindestens einen ersten Aktuators für das vordefinierte erste Zeitintervall unter Benutzung mindestens eines zweiten Sensors;
(d) Bestimmen einer Anfangsposition der Last in Relation zu dem ersten Bezugspunkt und/oder dem zweiten Bezugspunkt;
(e) Erzeugen eines vorhergesagten Bewegungsmodells des sich bewegenden Fahrzeugs für ein vordefiniertes zweites Zeitintervall nach dem vordefinierten ersten Zeitintervall aus den Bewegungsdaten;
(f) Erzeugen eines Steueralgorithmus, der angepasst ist, um den mindestens einen ersten Aktuator zu steuern, sodass mindestens eine vorbestimmte Reaktion während des vordefinierten zweiten Zeitintervalls bewirkt wird, unter Benutzung des vorhergesagten Bewegungsmodells und mindestens eines vorhergesagten Leistungsparameters des mindestens einen ersten Aktuators;
(g) Bestimmen eines ersten Korrekturfaktors aus Unterschieden zwischen den Bewegungsdaten und dem vorhergesagten Bewegungsmodell und eines zweiten Korrekturfaktors aus Unterschieden zwischen dem mindestens einen Leistungsparameter und dem mindestens einen vorhergesagten Leistungsparameter,
(h) Wiederholen der Schritte (a) bis (g) für jedes nachfolgende Zeitintervall unter Benutzung des ersten Korrekturfaktors und des zweiten Korrekturfaktors,

**dadurch gekennzeichnet, dass** der mindestens eine zweite Sensor ein beliebiges oder alle von Folgendem beinhaltet: einem Kraftaufnehmer oder Lastsensor, einem Drehmomentsensor, einem Geschwindigkeitssensor, einem Beschleunigungsmesser und einem Absolut- oder Relativpositionssensor, und wobei der Relativpositionssensor ein beliebiger von einem Messgeber, Schleifdrahtpotentiometer, Drehmelder, Näherungssensor und einem Differentialtransformator (LVDT = Linear Variable Differential Transformer) ist.

**2.** Verfahren gemäß Anspruch 1, ferner beinhaltend einen Simulationsschritt (s1), der selektiv vor Schritt (b) ausführbar ist und angepasst ist, um unter Benutzung mindestens einer simulierten geometrischen Eigenschaft, eines simulierten vorhergesagten Bewegungsmodells und mindestens eines simulierten Leistungsparameters eine simulierte Reaktion der Last zu erzeugen.

**3.** Verfahren gemäß einem der vorhergehenden Ansprüche, ferner beinhaltend einen zweiten Simulationsschritt (s2), der selektiv nach Schritt (f) ausführbar ist und angepasst ist, um unter Benutzung der mindestens einen geometrischen Eigenschaft, des vorhergesagten Bewegungsmodells und des mindestens einen vorhergesagten Leistungsparameters eine simulierte Reaktion der Last zu erzeugen.

**4.** Verfahren gemäß einem der vorhergehenden Ansprüche, wobei der mindestens eine Leistungsparameter eine Abweichung eines an dem vordefinierten ersten Zeitintervall gemessenen tatsächlichen Leistungsparameters von einem vordefinierten Standardleistungsparameter des mindestens einen ersten Aktuators ist.

**5.** Verfahren gemäß Anspruch 4, wobei der mindestens eine Leistungsparameter ein beliebiges oder alle von Folgendem beinhaltet: einer Trägheit, einer Geschwindigkeit, einer Beschleunigung, einer Position des mindestens einen ersten Aktuators und/oder einer Kopplungskraft, die zwischen der Last und dem mindestens einen ersten Aktuator wirkt, und/oder einer Reaktionszeit des mindestens einen ersten Aktuators auf ein Betätigungssignal.

**6.** Verfahren gemäß einem der vorhergehenden Ansprüche, wobei die mindestens eine vorbestimmte Reaktion selektiv eines oder alle von Folgendem beinhaltet: (i) Positionieren der Last auf mindestens einem Punkt einer vorbestimmten Trajektorie in Relation zu dem ersten Bezugspunkt und/oder dem zweiten Bezugspunkt und (ii) Aufrechterhalten einer vordefinierten Kopplungskraft zwischen der Last und dem mindestens einen ersten Aktuator.

**7.** Verfahren gemäß einem der vorhergehenden Ansprüche, wobei die Bewegungsdaten ein beliebiges oder eine beliebige Kombination von Folgendem beinhalten: einer Stampfbewegung, Rollbewegung, Tauchbewegung, Gierbewegung, Schwankbewegung und Wogenbewegung des Fahrzeugs relativ zu dem ersten Bezugspunkt.

**8.** Verfahren gemäß einem der vorhergehenden Ansprüche, wobei der erste Bezugspunkt eine fixierte Stelle auf der Erdoberfläche (20) ist und wobei der zweite Bezugspunkt ein an dem sich bewegenden Fahrzeug (10) fixierter Lastaufhängepunkt ist.

**9.** Verfahren gemäß einem der vorhergehenden Ansprüche, wobei der mindestens eine erste Sensor mindestens einen Positionssensor beinhaltet, der betriebsfähig mit dem sich bewegenden Fahrzeug koppelbar ist und der ein beliebiges oder eine beliebige Kombination von Folgendem beinhaltet: einer Bewegungsbezugseinheit (MRU = Motion Reference Unit) (24), einer Trägheitsmesseinheit (IMU = Inertial Measurement Unit), mindestens einem Beschleunigungsmesser, mindestens einem Gyroskop, mindestens einem Magnetometer und einem globalen Positionierungssystem (GPS).

**10.** Verfahren gemäß einem der vorhergehenden Ansprüche, wobei der mindestens eine erste Sensor und der mindestens eine zweite Sensor einen drahtlosen Transceiver beinhalten.

**11.** Verfahren gemäß einem der vorhergehenden Ansprüche, wobei der mindestens eine erste Aktuator einen beliebigen oder alle von Folgendem beinhaltet: einem Drehaktuator, einem Linearaktuator und einem hybriden Linear-/Drehaktuator, wobei jeder angepasst ist, um die Last von einer ersten Position in mindestens eine zweite Position zu bewegen.

**12.** Eine adaptive Steuerung, die betriebsfähig mit mindestens einem ersten Aktuator und/oder mindestens einem ersten Sensor koppelbar ist und angepasst ist, um ein Verfahren gemäß einem der Ansprüche 1 bis 11 auszuführen.

**13.** Adaptive Steuerung gemäß Anspruch 12, wobei der mindestens eine erste Sensor mindestens einen Positionssensor beinhaltet und wobei der Positionssensor und die adaptive Steuerung betriebsfähig in einer einzigen Einheit kombiniert sind.

**14.** Adaptive Steuerung gemäß Anspruch 13, wobei der Positionssensor ein beliebiges oder eine beliebige Kombination von Folgendem beinhaltet: einer Bewegungsbezugseinheit (MRU), einer Trägheitsmesseinheit (IMU), mindestens einem Beschleunigungsmesser, mindestens einem Gyroskop, mindestens einem Magnetometer und einem globalen Positionierungssystem (GPS).

**15.** Ein computerlesbares Speichermedium mit einem darauf enthaltenen Computerprogramm, das konfiguriert ist, um das Verfahren gemäß einem der Ansprüche 1 bis 11 durchzuführen, wenn es von einem Computerprozessor ausgeführt wird.

## Revendications

**1.** Un procédé pour la compensation adaptative de mouvement d’une charge commandée par au moins un premier actionneur (16) sur un navire mobile (10), comprenant les étapes :

(a) d’obtention de données de mouvement du navire mobile pour un premier intervalle de temps prédéfini dans au moins un premier degré de liberté (DOF, Degree of Freedom) relativement à un premier point de référence en provenance d’au moins un premier capteur ;

(b) de fourniture d’au moins une caractéristique géométrique dudit au moins un premier actionneur relativement à un deuxième point de référence sur le navire mobile ;
(c) de détermination d'au moins un paramètre de performance dudit au moins un premier actionneur pour ledit premier intervalle de temps prédéfini en utilisant au moins un deuxième capteur ;
(d) de détermination d'une position initiale de ladite charge relativement audit premier point de référence et/ou audit deuxième point de référence ;
(e) de génération d'un modèle de mouvement prédit du navire mobile pour un deuxième intervalle de temps prédéfini, postérieur audit premier intervalle de temps prédéfini, à partir desdites données de mouvement ;
(f) de génération d'un algorithme de commande conçu pour commander ledit au moins un premier actionneur, de façon à effectuer au moins une réponse prédéterminée pendant ledit deuxième intervalle de temps prédéfini, en utilisant ledit modèle de mouvement prédit et au moins un paramètre de performance prédit dudit au moins un premier actionneur ;
(g) de détermination d'un premier facteur de correction à partir de différences entre lesdites données de mouvement et ledit modèle de mouvement prédit, et d'un deuxième facteur de correction à partir de différences entre ledit au moins un paramètre de performance et ledit au moins un paramètre de performance prédit,
(h) de répétition des étapes (a) à (g) pour chaque intervalle de temps postérieur en utilisant ledit premier facteur de correction et ledit deuxième facteur de correction,

**caractérisé en ce que** ledit au moins un deuxième capteur comprend un élément quelconque ou tous parmi une cellule de charge ou un capteur de charge, un capteur de couple, un capteur de vitesse, un accéléromètre et un capteur de position absolue ou relative, et ledit capteur de position relative étant un élément quelconque parmi un encodeur, un potentiomètre à curseur, un résolveur, un capteur de proximité et un transformateur différentiel à variation linéaire (LVDT, Linear Variable Differential Transformer).

**2.** Un procédé selon la revendication 1, comprenant en sus une étape de simulation (s1) exécutable de façon sélective préalablement à l'étape (b) et conçue pour générer une réponse simulée de ladite charge, en utilisant au moins une caractéristique géométrique simulée, un modèle de mouvement prédit simulé et au moins un paramètre de performance simulé.

**3.** Un procédé selon l'une quelconque des revendications précédentes, comprenant en sus une deuxième étape de simulation (s2) exécutable de façon sélective postérieurement à l'étape (f) et conçue pour générer une réponse simulée de ladite charge, en utilisant ladite au moins une caractéristique géométrique, ledit modèle de mouvement prédit et ledit au moins un paramètre de performance prédit.

**4.** Un procédé selon l'une quelconque des revendications précédentes, dans lequel ledit au moins un paramètre de performance est un écart d'un paramètre de performance réel mesuré audit premier intervalle de temps prédéfini par rapport à un paramètre de performance normalisé prédéfini dudit au moins un premier actionneur.

**5.** Un procédé selon la revendication 4, dans lequel ledit au moins un paramètre de performance comprend un élément quelconque ou tous parmi une force d'inertie, une vitesse, une accélération, une position dudit au moins un premier actionneur, et/ou une force de couplage agissant entre ladite charge et ledit au moins un premier actionneur, et/ou un temps de réponse dudit au moins un premier actionneur à un signal d'actionnement.

**6.** Un procédé selon l'une quelconque des revendications précédentes, dans lequel ladite au moins une réponse prédéterminée comprend de façon sélective une action quelconque ou toutes parmi (i) le positionnement de ladite charge sur au moins un point d'une trajectoire prédéterminée relativement audit premier point de référence et/ou audit deuxième point de référence, et (ii) le maintien d'une force de couplage prédéfinie entre ladite charge et ledit au moins un premier actionneur.

**7.** Un procédé selon l'une quelconque des revendications précédentes, dans lequel lesdites données de mouvement comprennent un élément quelconque ou une combinaison quelconque parmi un tangage, un roulis, un pilonnement, un lacet, une embardée et un cavalement du navire relativement audit premier point de référence.

**8.** Un procédé selon l'une quelconque des revendications précédentes, dans lequel ledit premier point de référence est un emplacement fixé sur la surface terrestre (20) et dans lequel ledit deuxième point de référence est un point de suspension de charge fixé au navire mobile (10).

**9.** Un procédé selon l'une quelconque des revendications précédentes, dans lequel ledit au moins un premier capteur comprend au moins un capteur positionnel pouvant être couplé de façon fonctionnelle au navire mobile et celui-ci comprenant un élément quelconque ou une combinaison quelconque parmi une unité de référence de mouvement (MRU, Motion Reference Unit) (24), une unité de mesure inertielle (IMU, Inertial Measurement Unit), au moins un accéléromètre, au moins un gyroscope, au moins un magnétomètre et un système mondial de localisation (GPS, Global Positioning System).

**10.** Un procédé selon l'une quelconque des revendications précédentes, dans lequel ledit au moins un premier capteur et ledit au moins un deuxième capteur comprennent un émetteur-récepteur sans fil.

**11.** Un procédé selon l'une quelconque des revendications précédentes, dans lequel ledit au moins un premier actionneur comprend un élément quelconque ou tous parmi un actionneur rotatif, un actionneur linéaire et un actionneur hybride linéaire/rotatif, chacun étant conçu pour déplacer ladite charge d'une première position à au moins une deuxième position.

**12.** Un organe de commande adaptatif pouvant être couplé de façon fonctionnelle à au moins un premier actionneur et/ou à au moins un premier capteur, conçu pour exécuter un procédé selon l'une quelconque des revendications 1 à 11.

**13.** Un organe de commande adaptatif selon la revendication 12, dans lequel ledit au moins un premier capteur comprend au moins un capteur positionnel, et dans lequel ledit capteur positionnel et ledit organe de commande adaptatif sont combinés de façon fonctionnelle en une unité unique.

**14.** Un organe de commande adaptatif selon la revendication 13, dans lequel ledit capteur positionnel comprend un élément quelconque ou une combinaison quelconque parmi une unité de référence de mouvement (MRU), une unité de mesure inertielle (IMU), au moins un accéléromètre, au moins un gyroscope, au moins un magnétomètre et un système mondial de localisation (GPS).

**15.** Un support de stockage lisible par ordinateur sur lequel est incorporé un programme informatique configuré pour mettre en oeuvre le procédé de l'une quelconque des revendications 1 à 11 quand il est exécuté par un processeur informatique.

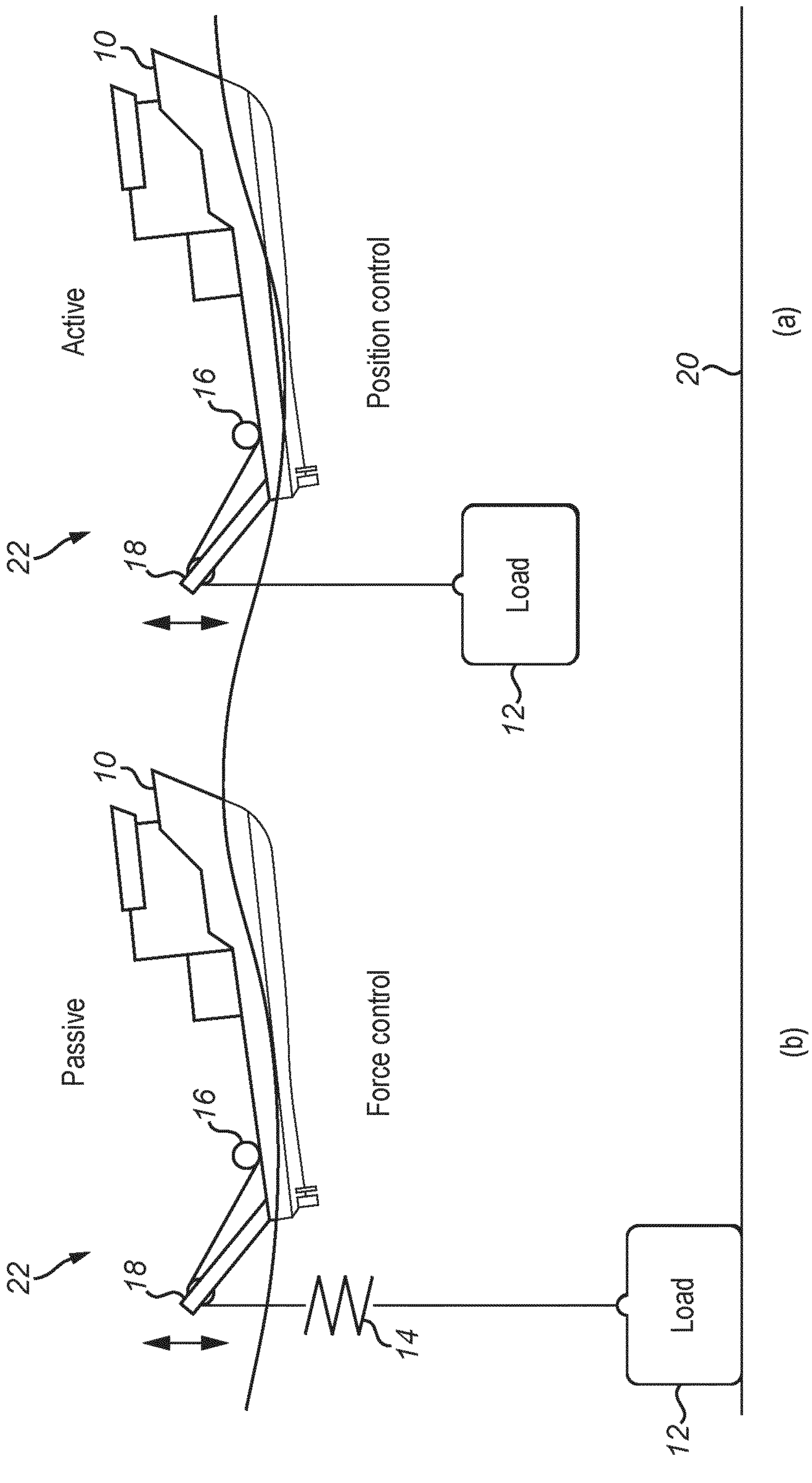
Active
Position control
Passive
Force control
Load
Load
(a)
(b)
10
12
14
16
18
20
22

FIG. 1

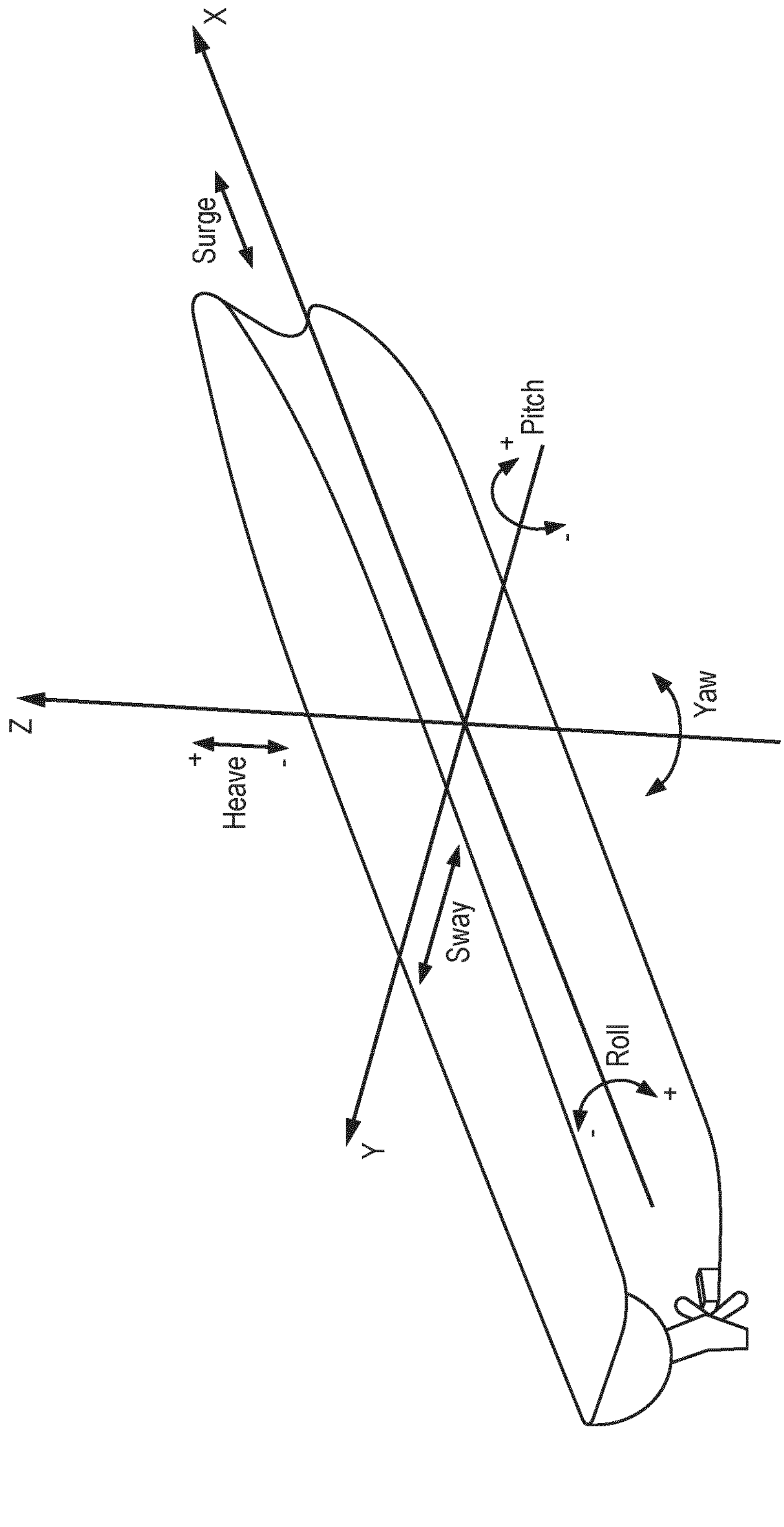


FIG. 2

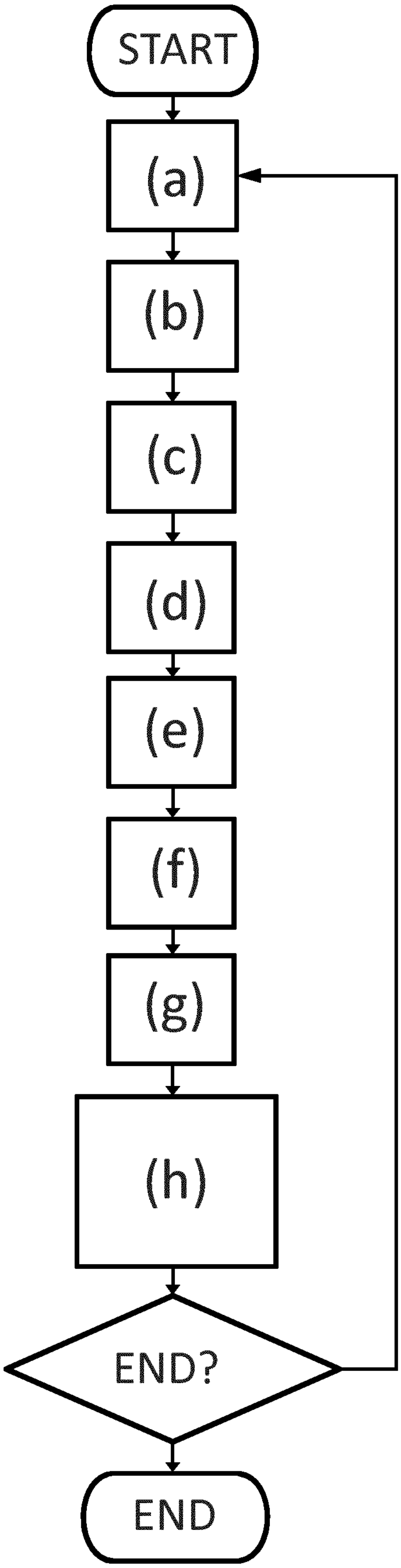


FIG. 3

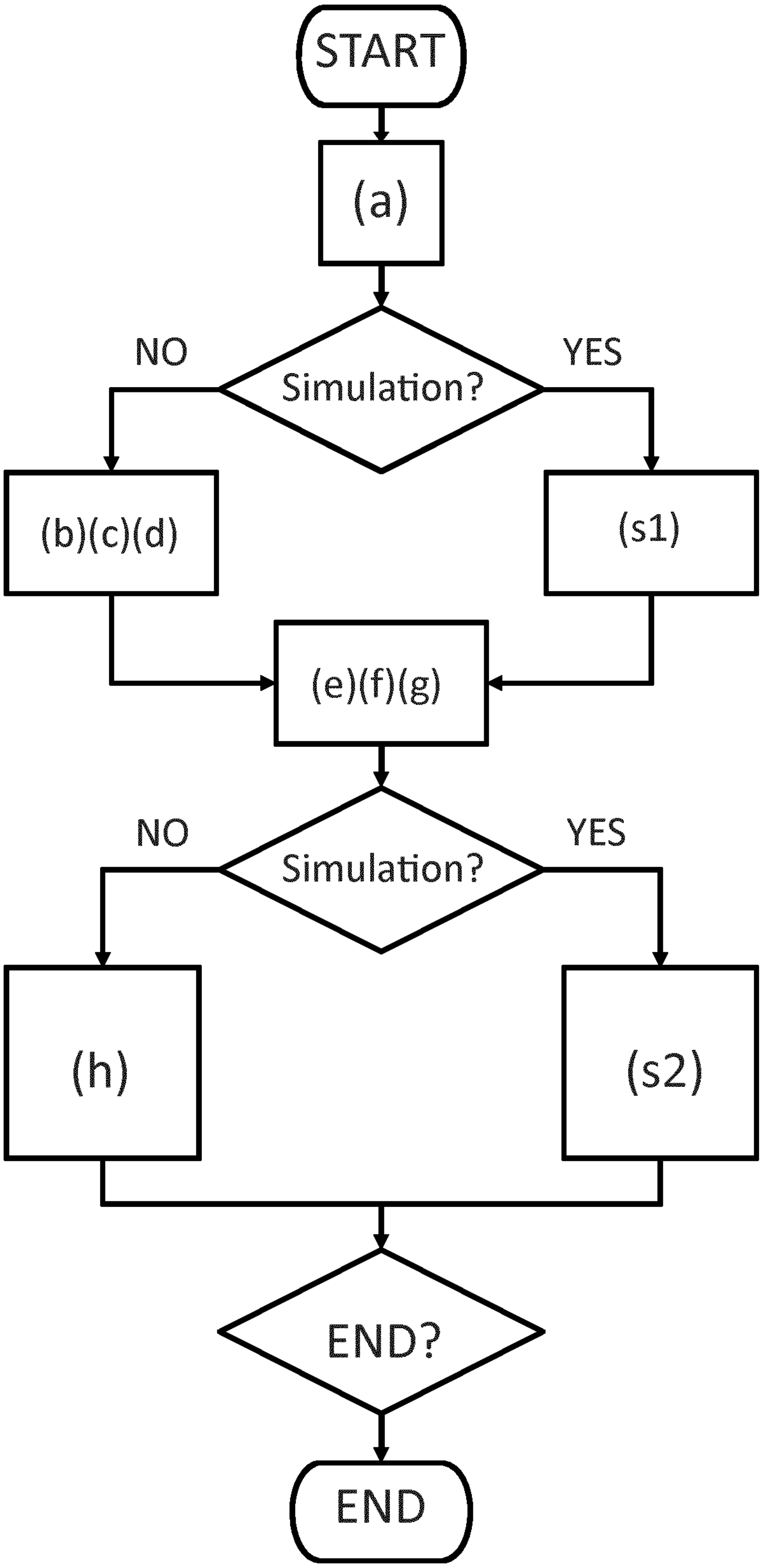
START
(a)
NO
Simulation?
YES
(b)(c)(d)
(s1)
(e)(f)(g)
NO
Simulation?
YES
(h)
(s2)
END?
END

FIG. 4

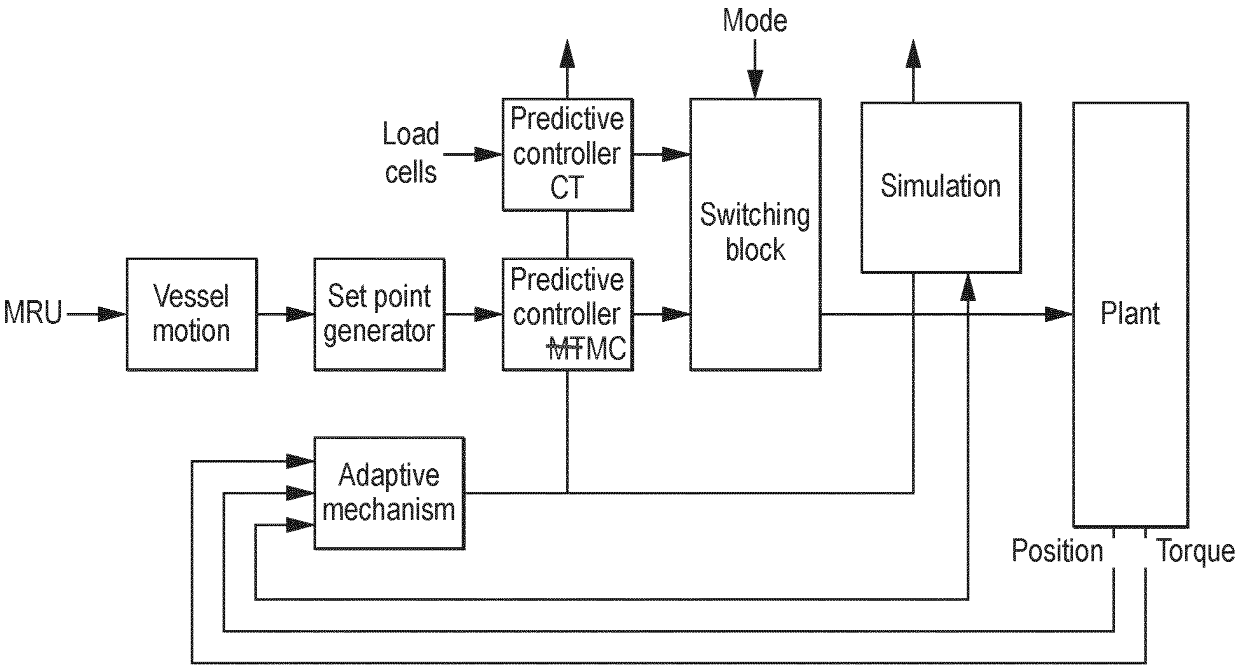
Mode
Load cells
Predictive controller CT
Switching block
Simulation
Plant
MRU
Vessel motion
Set point generator
Predictive controller MTMC
Adaptive mechanism
Position
Torque

FIG. 5

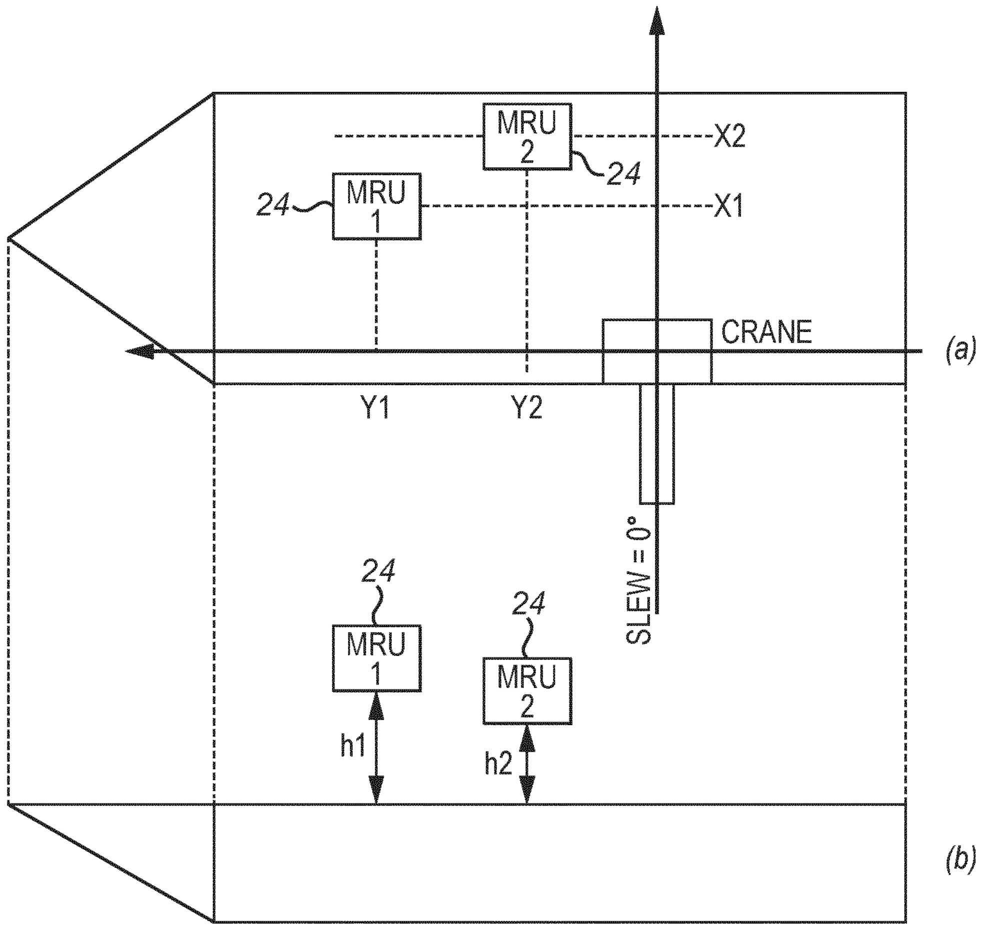
MRU
2
X2
24
24
MRU
1
X1
CRANE
(a)
Y1
Y2
SLEW = 0°
24
24
MRU
1
MRU
2
h1
h2
(b)

FIG. 6

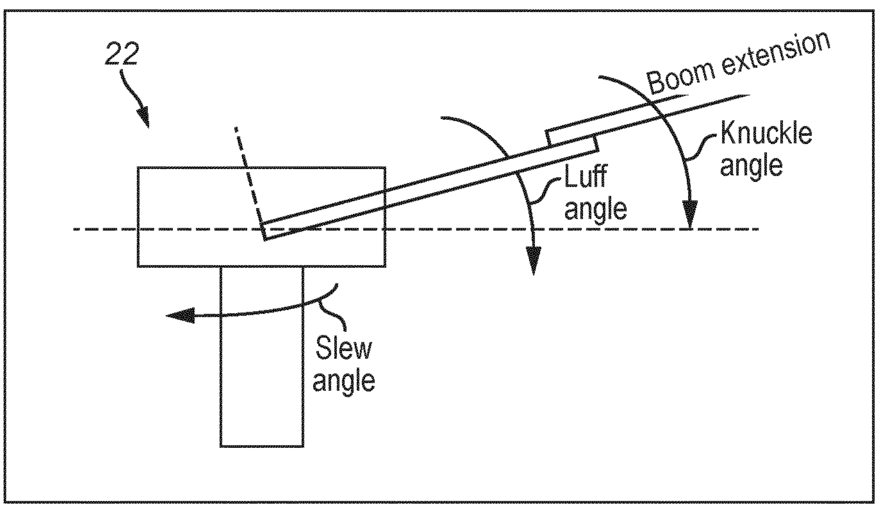
22
Boom extension
Knuckle
angle
Luff
angle
Slew
angle

FIG. 7

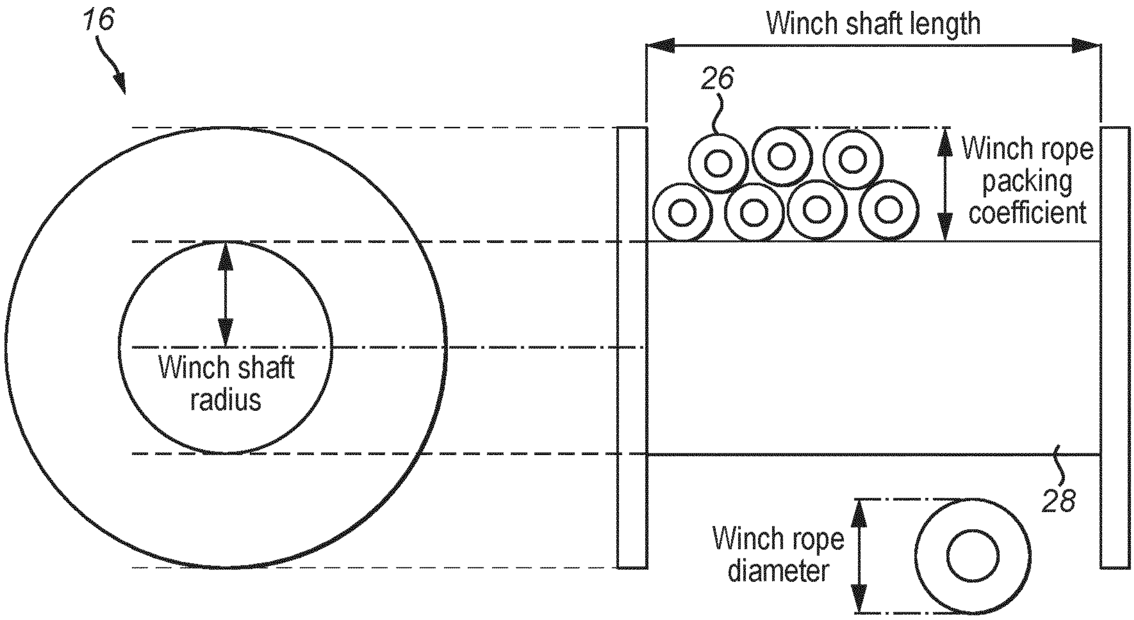
16
Winch shaft length
26
Winch rope
packing
coefficient
Winch shaft
radius
28
Winch rope
diameter

FIG. 8

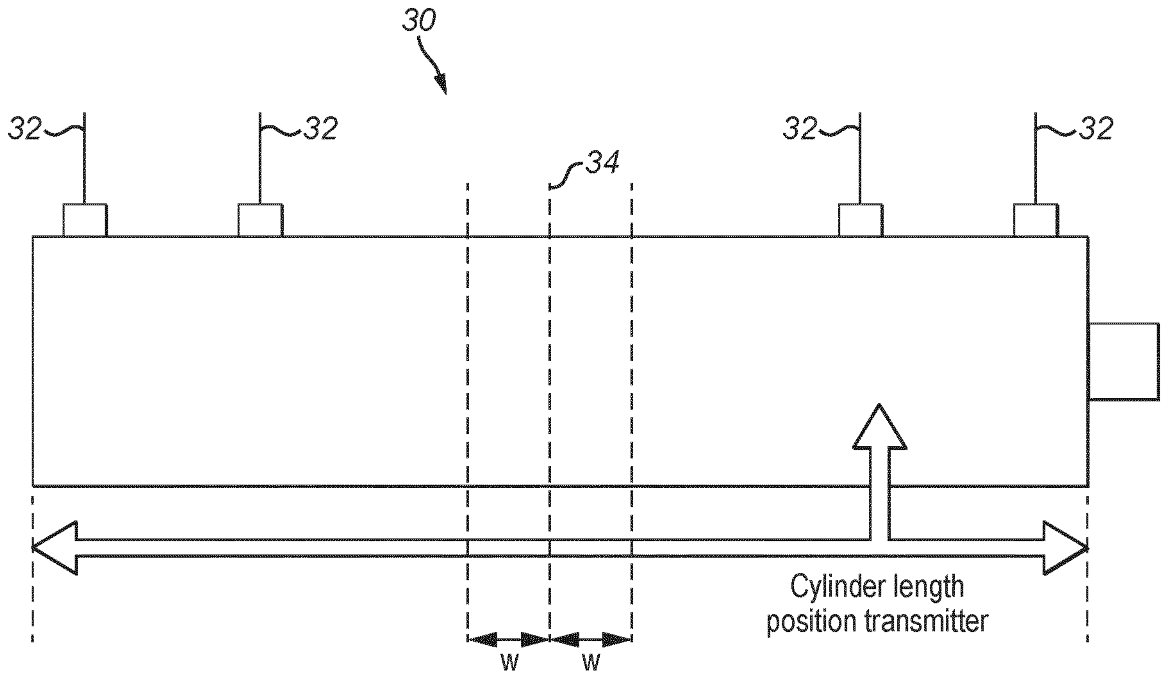
30
32
32
32
32
34
Cylinder length
position transmitter
w
w

FIG. 9

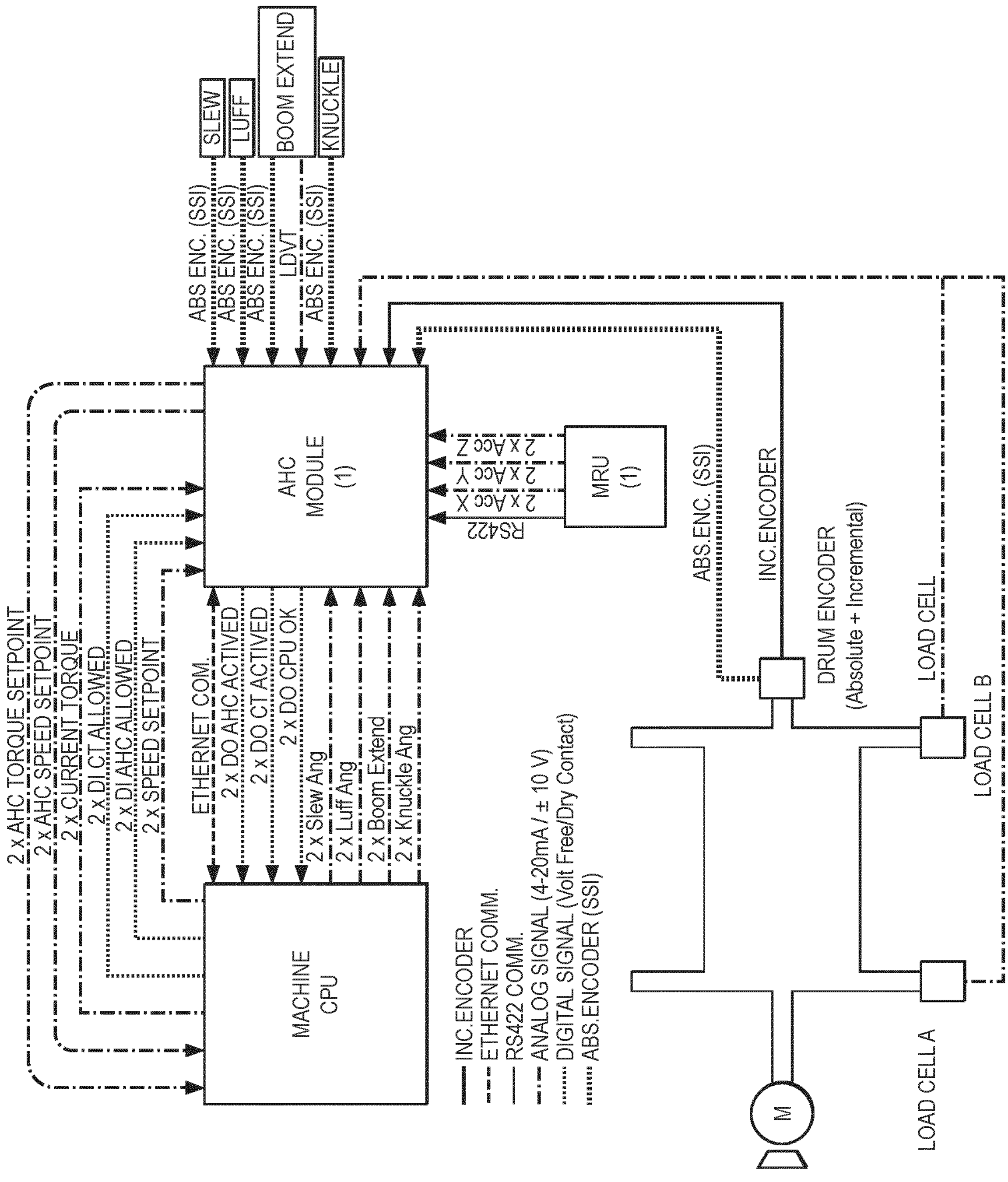

SLEW
LUFF
BOOM EXTEND
KNUCKLE
ABS ENC. (SSI)
ABS ENC. (SSI)
ABS ENC. (SSI)
LDVT
ABS ENC. (SSI)
AHC MODULE (1)
MRU (1)
2 x Acc Z
2 x Acc Y
2 x Acc X
RS422
ABS.ENC. (SSI)
INC.ENCODER
DRUM ENCODER (Absolute + Incremental)
LOAD CELL
LOAD CELL B
LOAD CELL A
M
MACHINE CPU
2 x AHC TORQUE SETPOINT
2 x AHC SPEED SETPOINT
2 x CURRENT TORQUE
2 x DI CT ALLOWED
2 x DI AHC ALLOWED
2 x SPEED SETPOINT
ETHERNET COM.
2 x DO AHC ACTIVED
2 x DO CT ACTIVED
2 x DO CPU OK
2 x Slew Ang
2 x Luff Ang
2 x Boom Extend
2 x Knuckle Ang
INC.ENCODER
ETHERNET COMM.
RS422 COMM.
ANALOG SIGNAL (4-20mA / ± 10 V)
DIGITAL SIGNAL (Volt Free/Dry Contact)
ABS.ENCODER (SSI)


FIG. 10

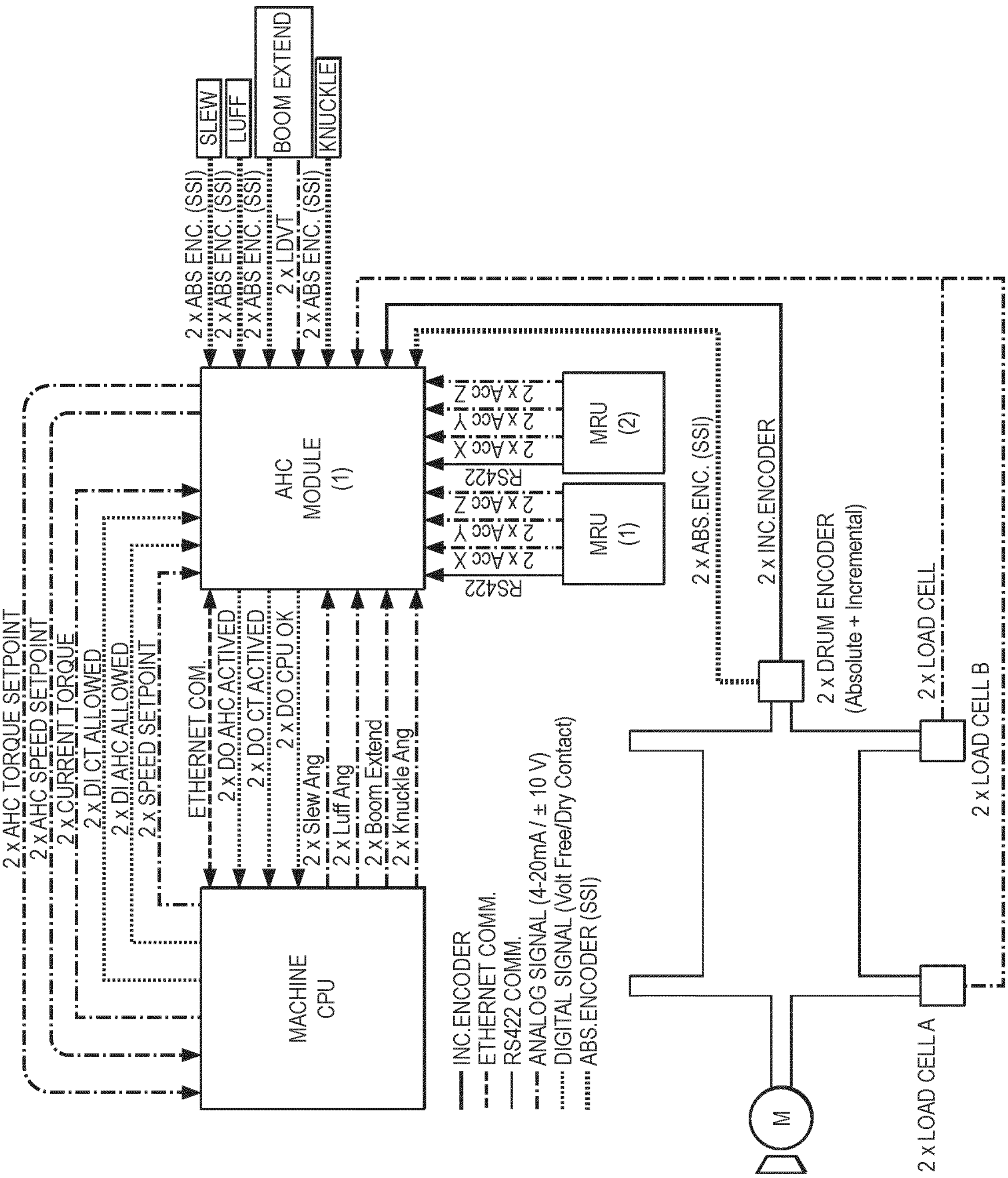
SLEW
LUFF
BOOM EXTEND
KNUCKLE
2 x ABS ENC. (SSI)
2 x ABS ENC. (SSI)
2 x ABS ENC. (SSI)
2 x LDVT
2 x ABS ENC. (SSI)
AHC MODULE (1)
MRU (1)
MRU (2)
2 x Acc X
2 x Acc Y
2 x Acc Z
RS422
2 x ABS.ENC. (SSI)
2 x INC.ENCODER
2 x DRUM ENCODER (Absolute + Incremental)
2 x LOAD CELL
2 x LOAD CELL B
2 x LOAD CELL A
M
2 x AHC TORQUE SETPOINT
2 x AHC SPEED SETPOINT
2 x CURRENT TORQUE
2 x DI CT ALLOWED
2 x DI AHC ALLOWED
2 x SPEED SETPOINT
ETHERNET COM.
2 x DO AHC ACTIVED
2 x DO CT ACTIVED
2 x DO CPU OK
2 x Slew Ang
2 x Luff Ang
2 x Boom Extend
2 x Knuckle Ang
MACHINE CPU
INC.ENCODER
ETHERNET COMM.
RS422 COMM.
ANALOG SIGNAL (4-20mA / ± 10 V)
DIGITAL SIGNAL (Volt Free/Dry Contact)
ABS.ENCODER (SSI)

FIG. 11

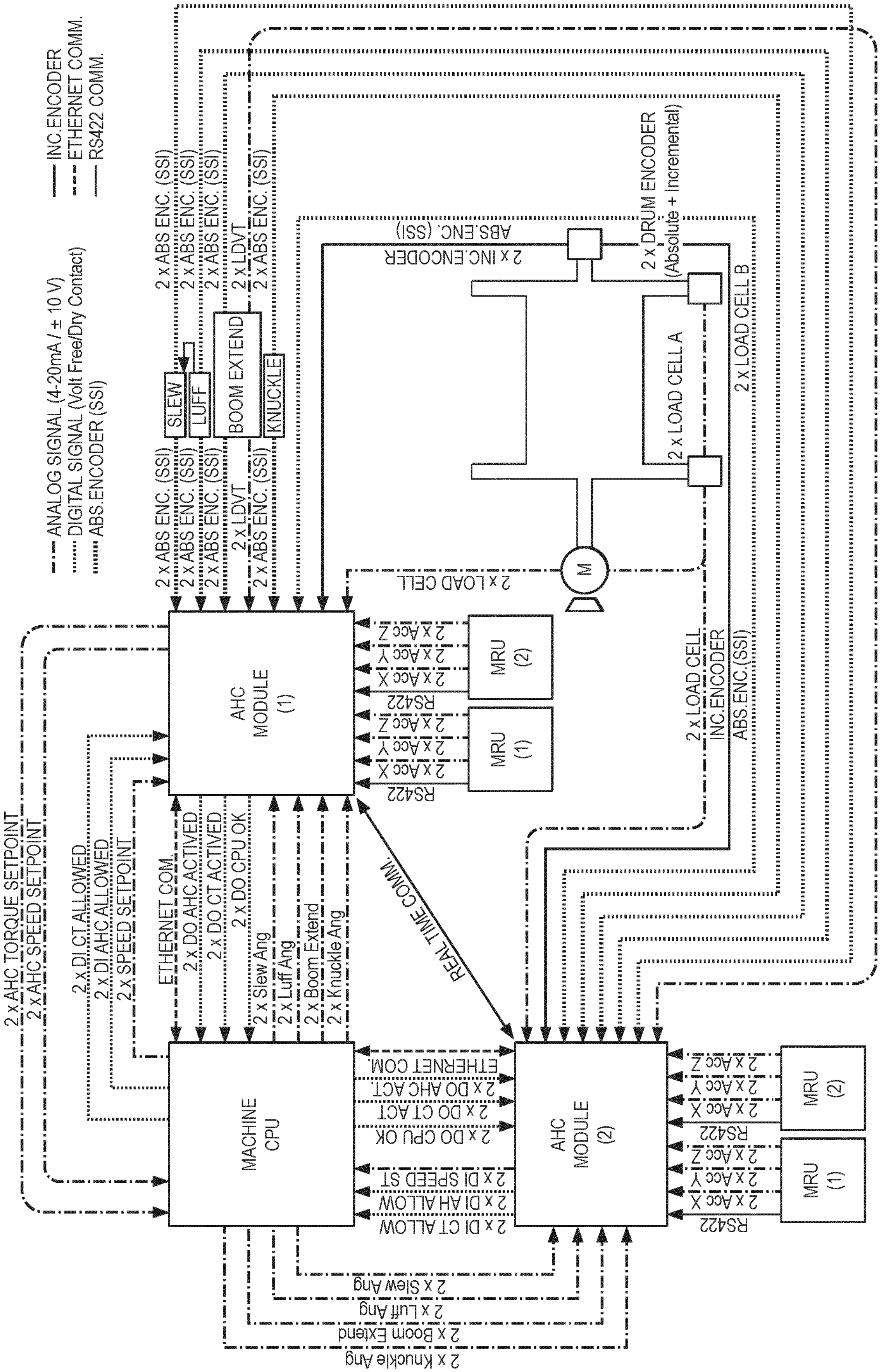
ANALOG SIGNAL (4-20mA / ± 10 V)
DIGITAL SIGNAL (Volt Free/Dry Contact)
ABS.ENCODER (SSI)
INC.ENCODER
ETHERNET COMM.
RS422 COMM.
2 x ABS ENC. (SSI)
2 x LDVT
SLEW
LUFF
BOOM EXTEND
KNUCKLE
2 x DRUM ENCODER (Absolute + Incremental)
2 x INC.ENCODER
ABS.ENC. (SSI)
2 x LOAD CELL A
2 x LOAD CELL B
2 x LOAD CELL
M
AHC MODULE (1)
AHC MODULE (2)
MACHINE CPU
MRU (1)
MRU (2)
RS422
2 x Acc X
2 x Acc Y
2 x Acc Z
2 x LOAD CELL
INC.ENCODER
ABS.ENC.(SSI)
REAL TIME COMM.
2 x AHC TORQUE SETPOINT
2 x AHC SPEED SETPOINT
2 x DI CT ALLOWED
2 x DI AHC ALLOWED
2 x SPEED SETPOINT
ETHERNET COM.
2 x DO AHC ACTIVED
2 x DO CT ACTIVED
2 x DO CPU OK
2 x Slew Ang
2 x Luff Ang
2 x Boom Extend
2 x Knuckle Ang
2 x DO AHC ACT.
2 x DO CT ACT
2 x DI SPEED ST
2 x DI AH ALLOW
2 x DI CT ALLOW

FIG. 12

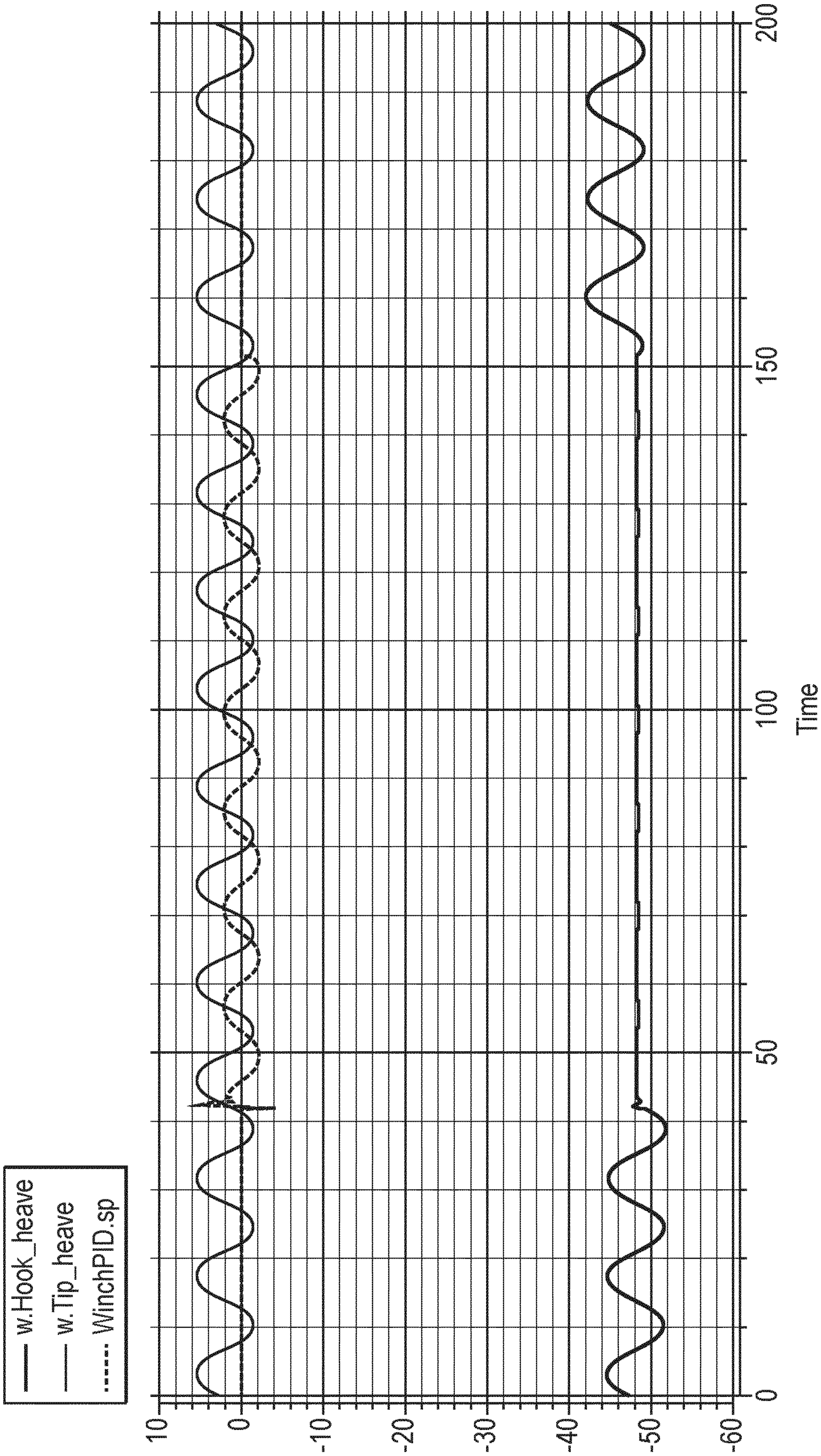

w.Hook_heave
w.Tip_heave
WinchPID.sp
10
0
-10
-20
-30
-40
-50
-60
0
50
100
150
200
Time


FIG. 13

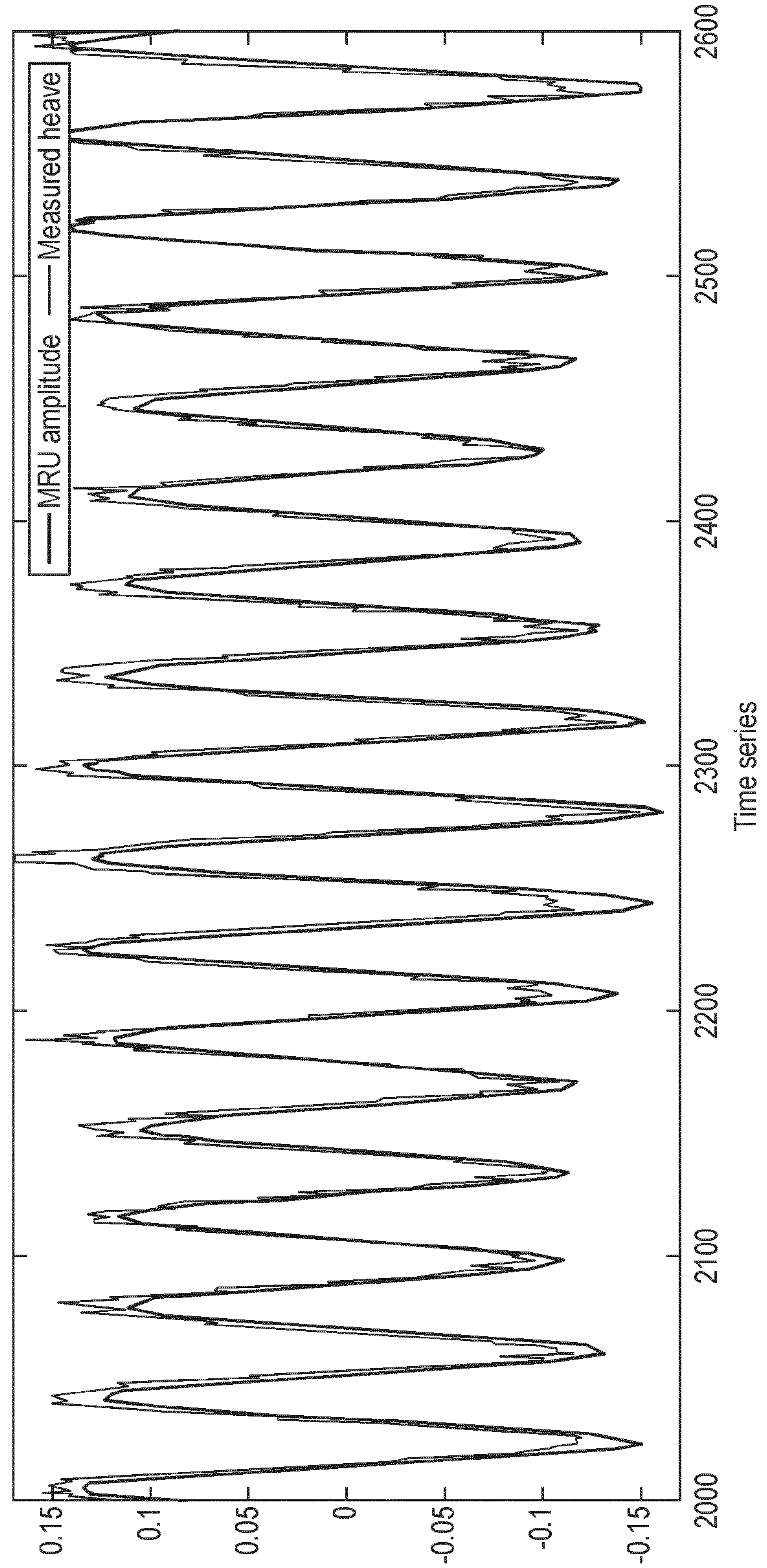
MRU amplitude
Measured heave
Amplitude in meters
0.15
0.1
0.05
0
-0.05
-0.1
-0.15
2000
2100
2200
2300
2400
2500
2600
Time series

FIG. 14(a)

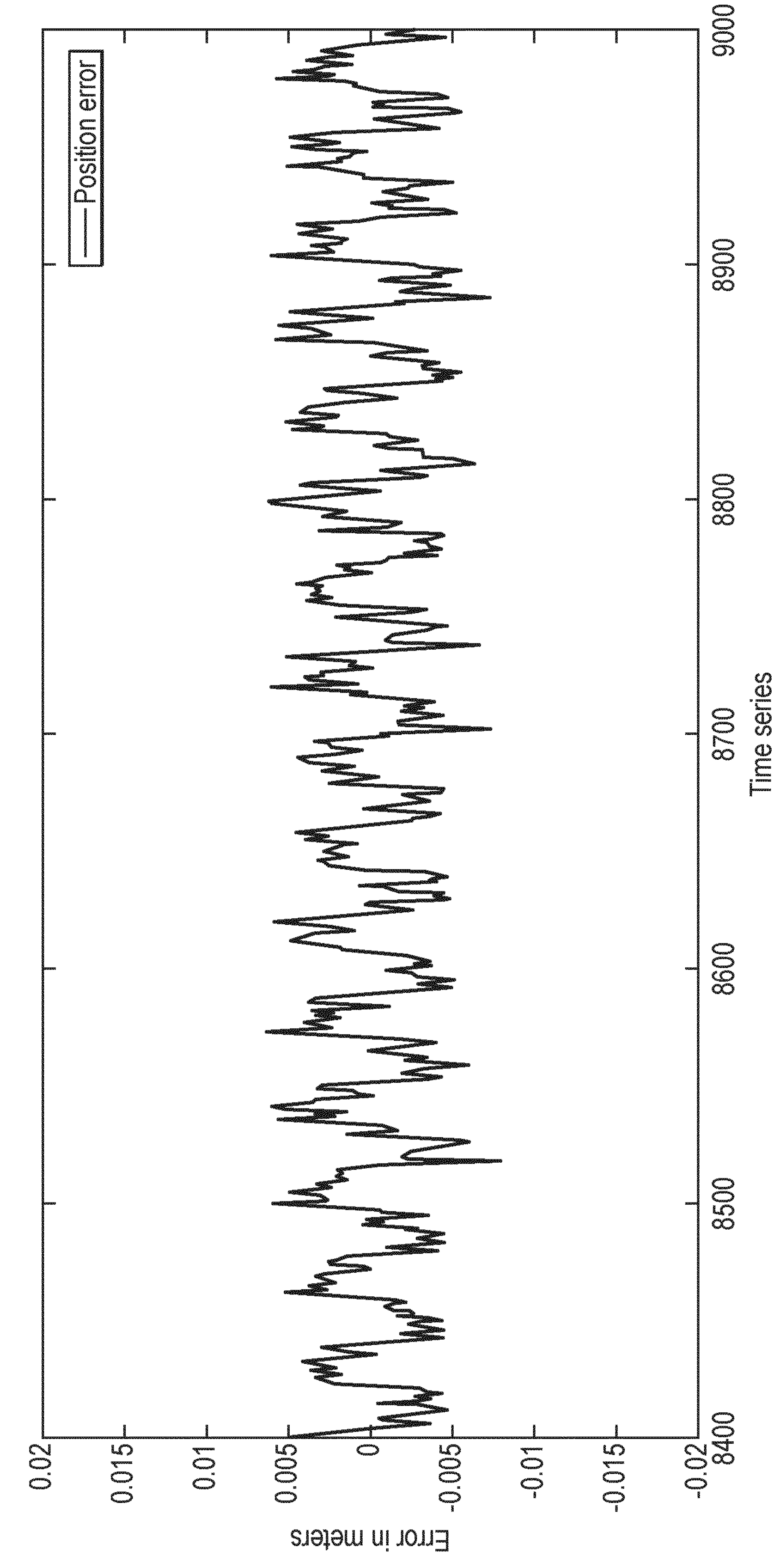
Position error
Error in meters
0.02
0.015
0.01
0.005
0
-0.005
-0.01
-0.015
-0.02
8400
8500
8600
8700
8800
8900
9000
Time series

FIG. 14(b)

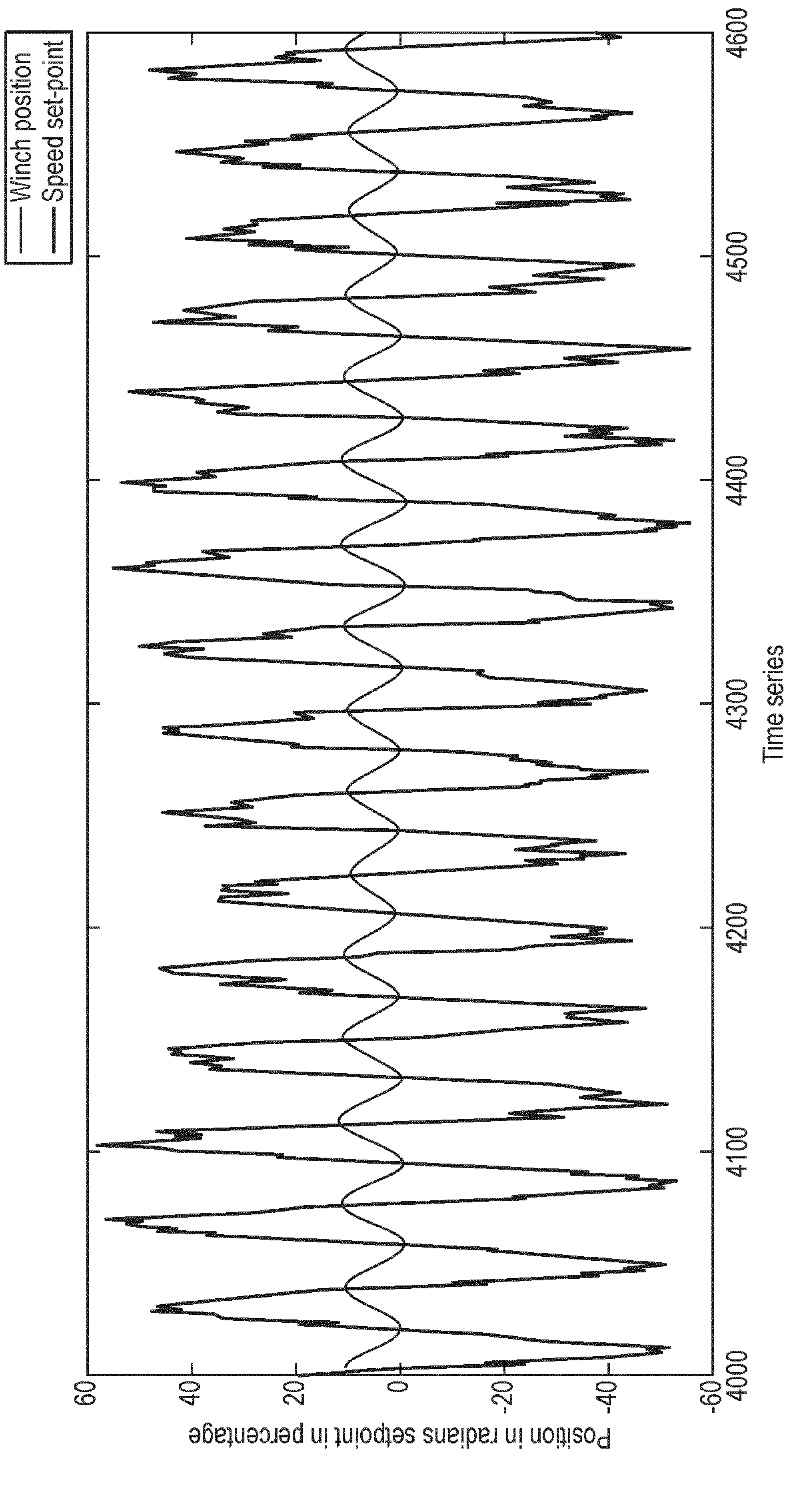
Winch position
Speed set-point
60
40
20
0
-20
-40
-60
Position in radians setpoint in percentage
4000
4100
4200
4300
4400
4500
4600
Time series

FIG. 14(c)

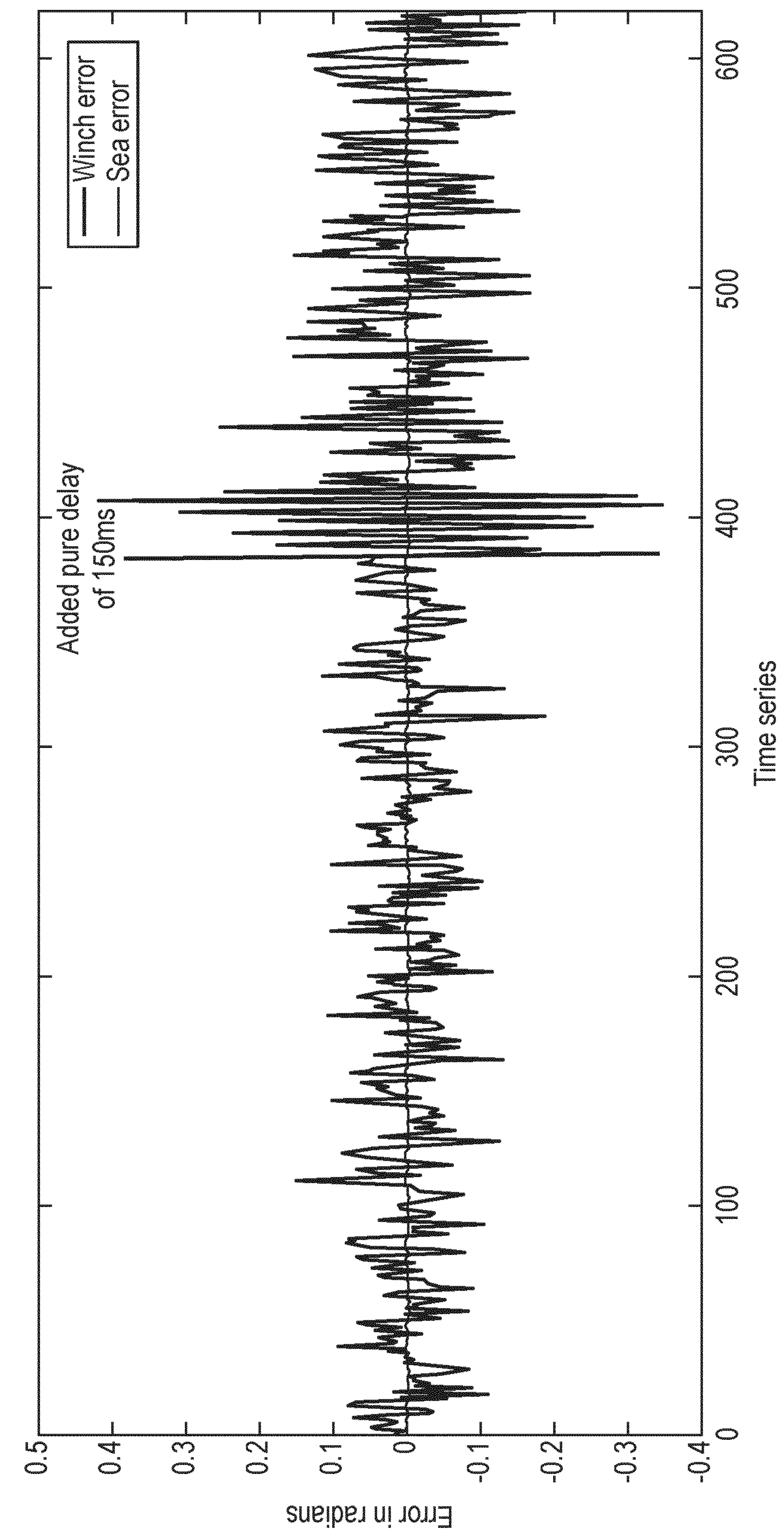
Winch error
Sea error
Added pure delay
of 150ms
Error in radians
0.5
0.4
0.3
0.2
0.1
0
-0.1
-0.2
-0.3
-0.4
0
100
200
300
400
500
600
Time series

FIG. 15(a)

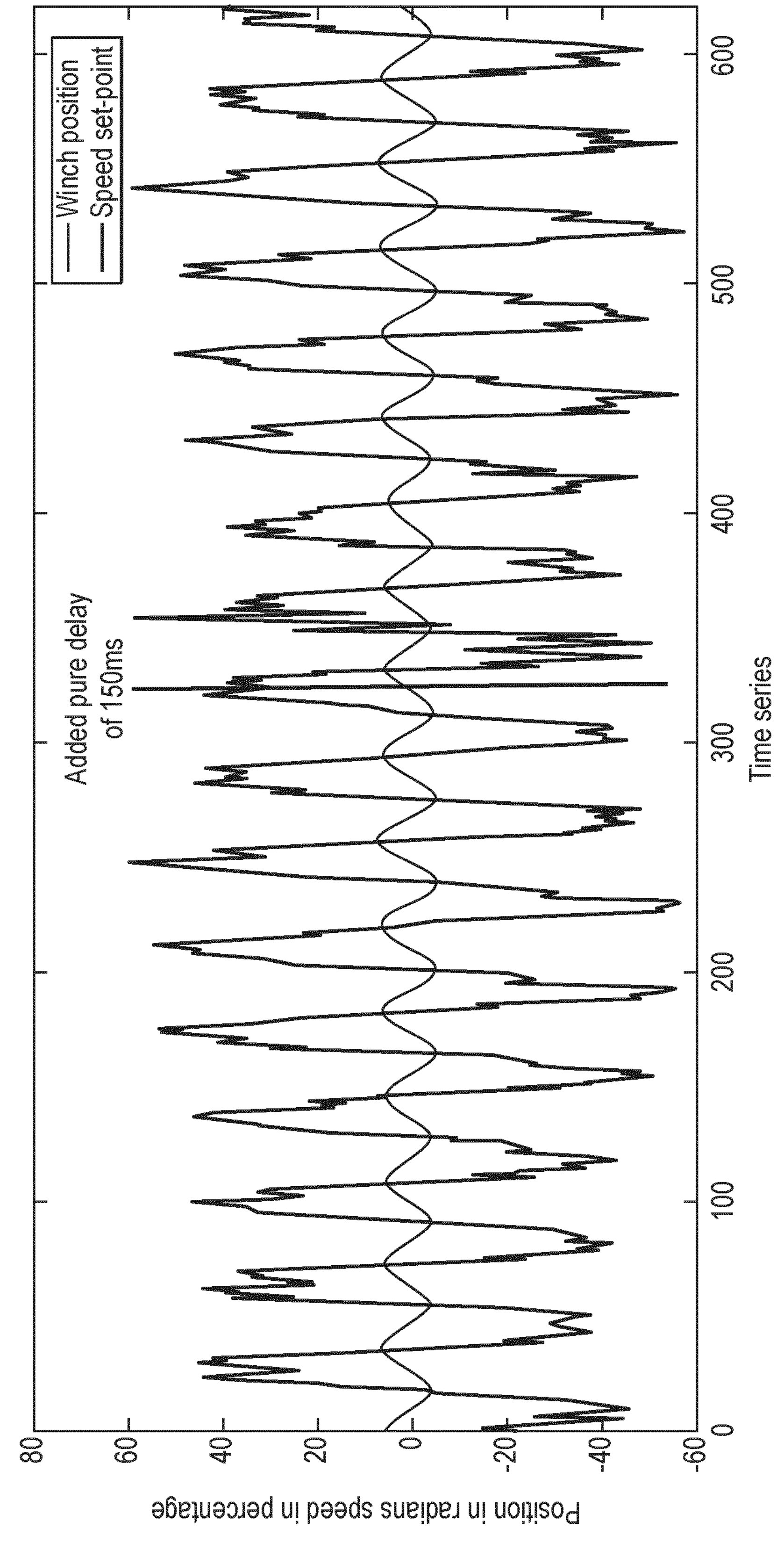

Winch position
Speed set-point
Added pure delay
of 150ms
Time series
Position in radians speed in percentage
80
60
40
20
0
-20
-40
-60
0
100
200
300
400
500
600


FIG. 15(b)

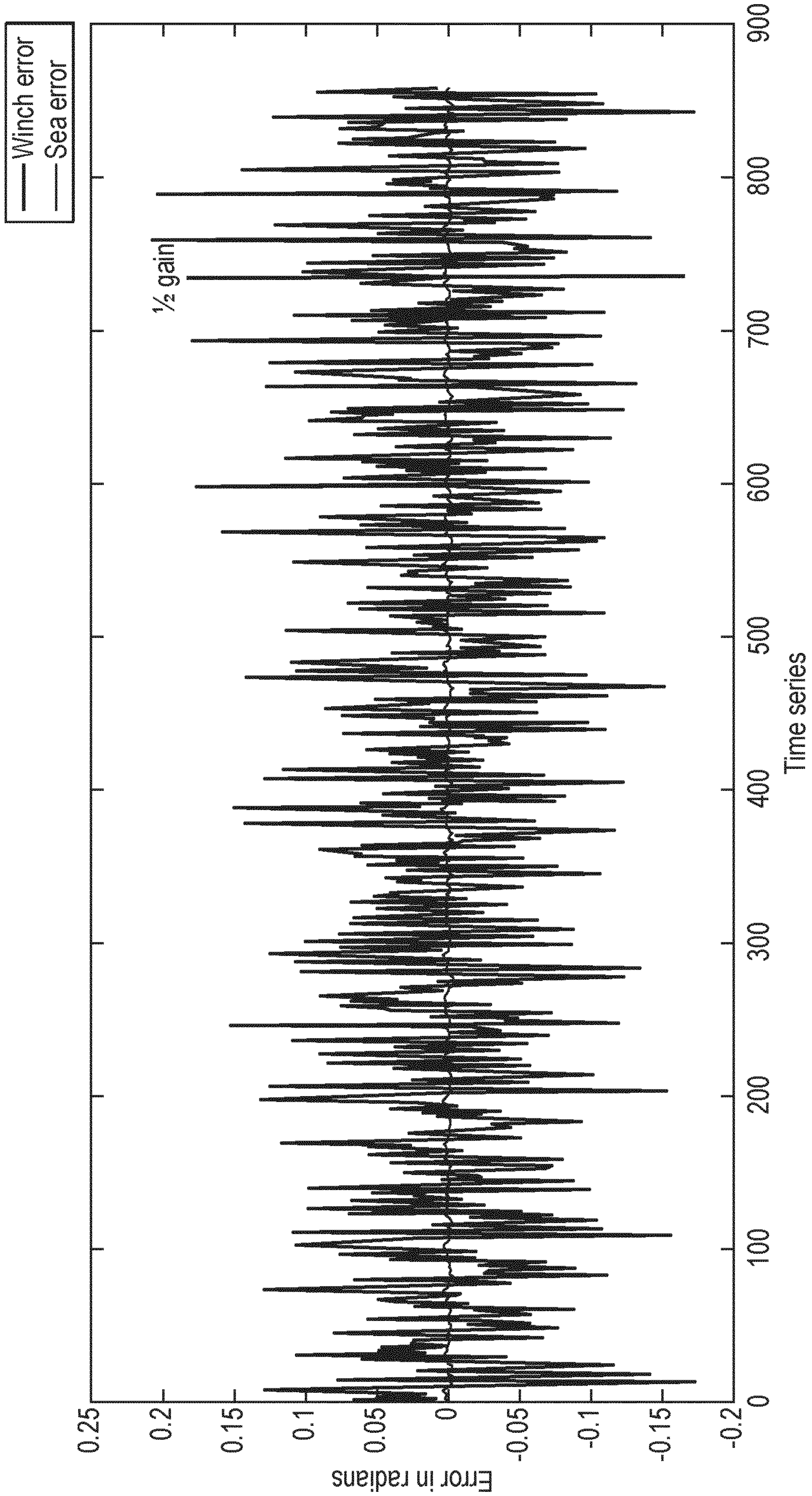
Winch error
Sea error
½ gain
Error in radians
0.25
0.2
0.15
0.1
0.05
0
-0.05
-0.1
-0.15
-0.2
Time series
0
100
200
300
400
500
600
700
800
900

FIG. 16(a)

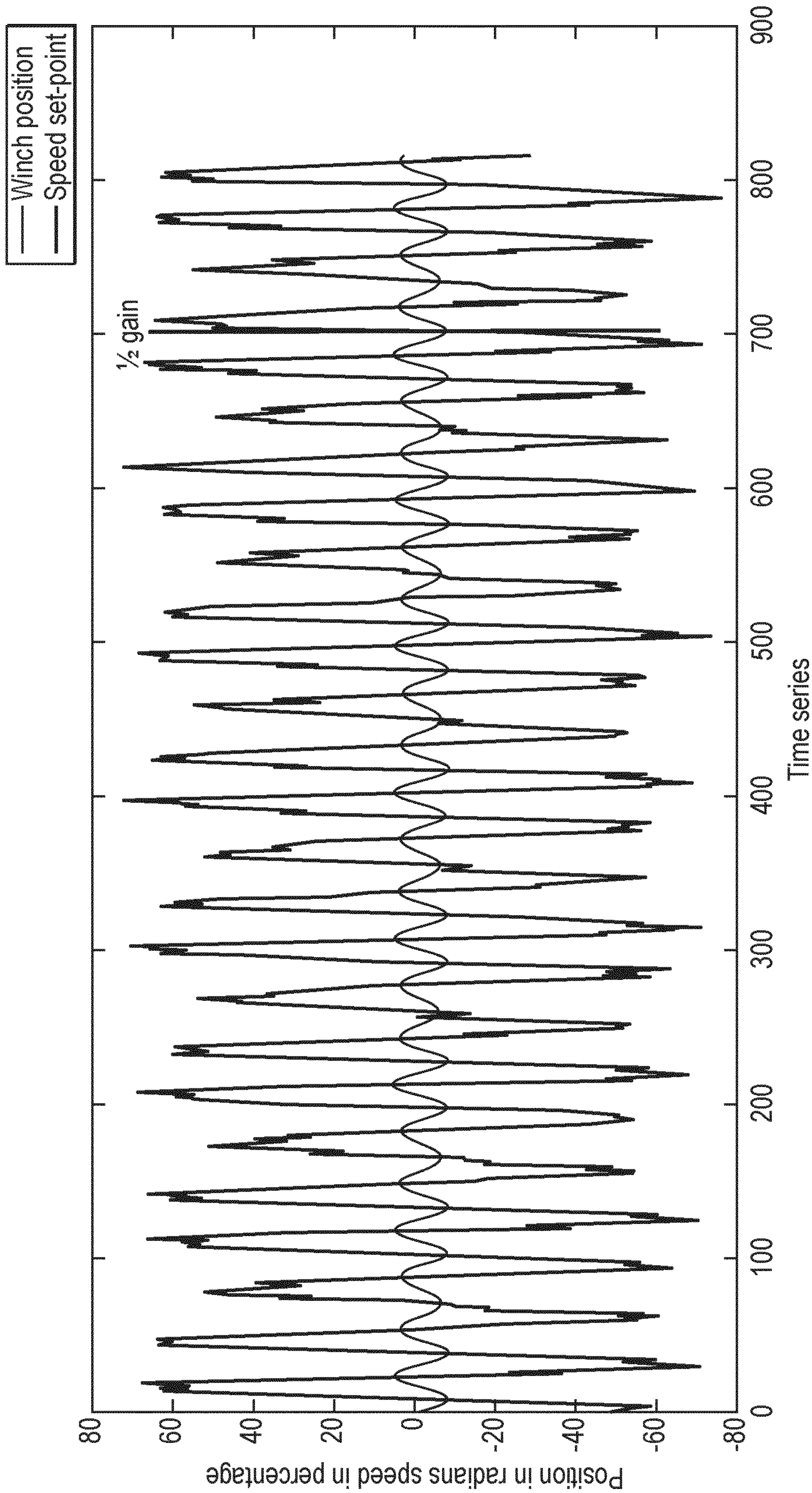
Winch position
Speed set-point
½ gain
Time series
Position in radians speed in percentage
80
60
40
20
0
-20
-40
-60
-80
0
100
200
300
400
500
600
700
800
900

FIG. 16(b)

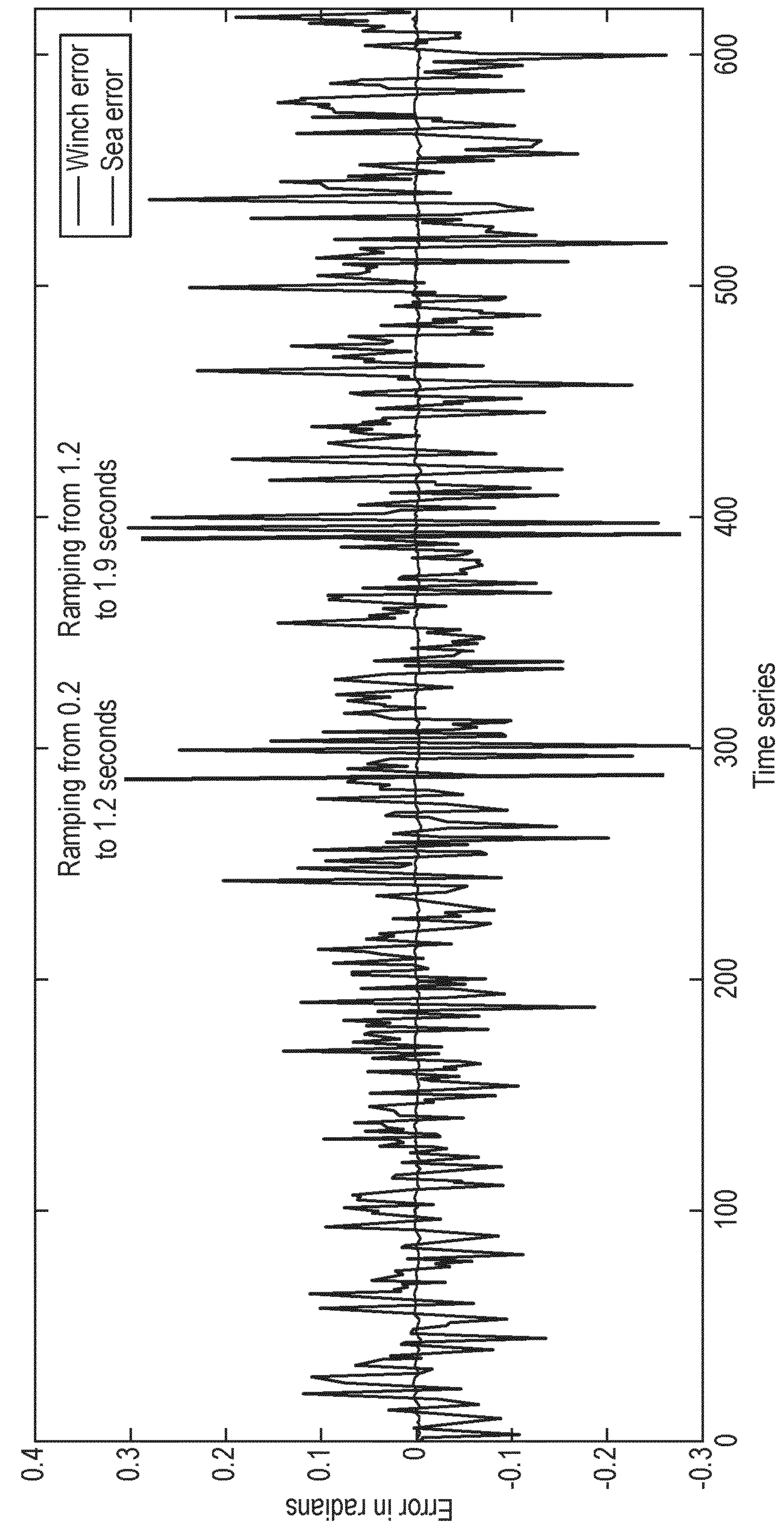
Winch error
Sea error
Ramping from 0.2
to 1.2 seconds
Ramping from 1.2
to 1.9 seconds
Error in radians
Time series
0.4
0.3
0.2
0.1
0
-0.1
-0.2
-0.3
0
100
200
300
400
500
600

FIG. 17(a)

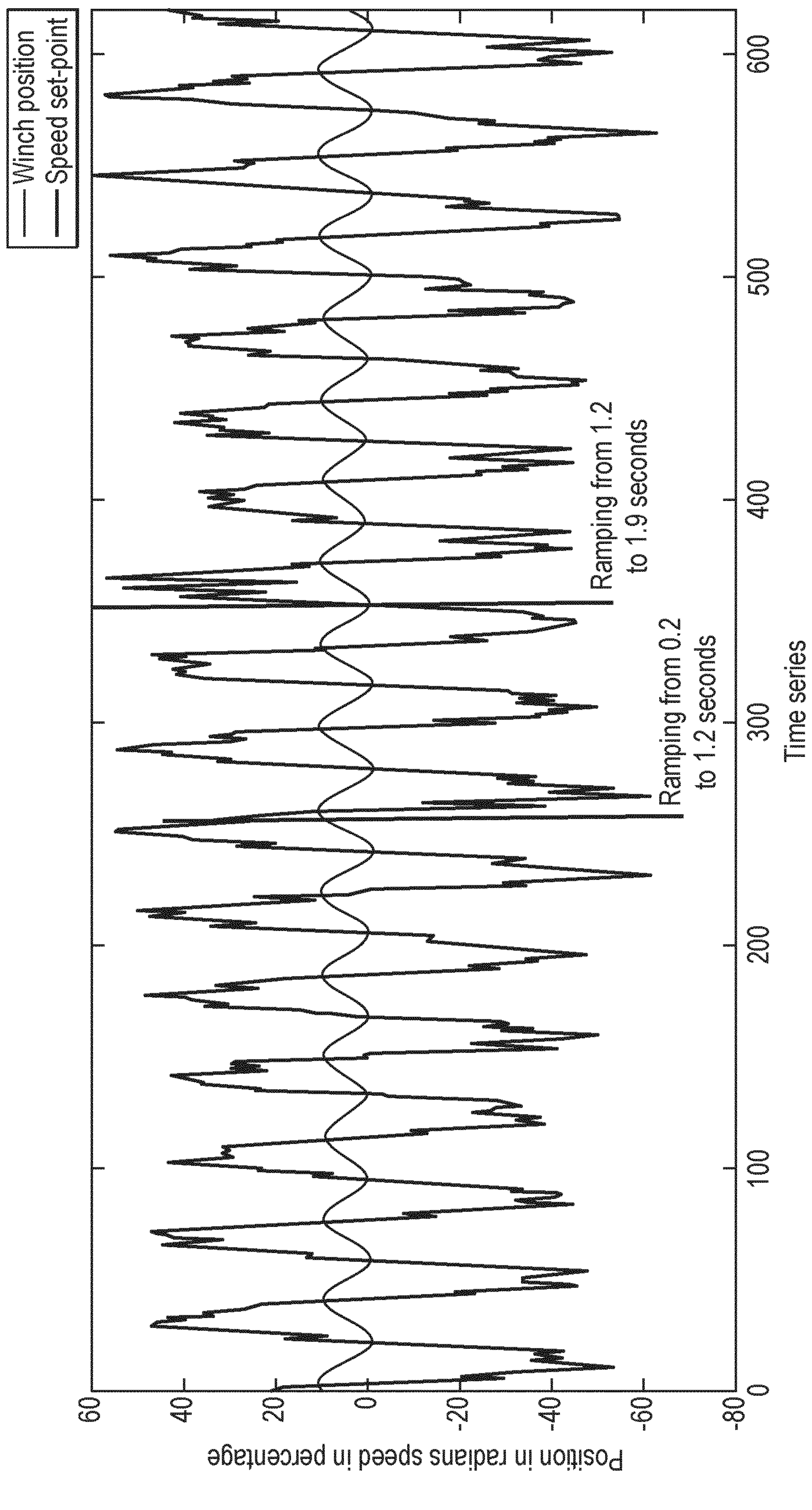
Winch position
Speed set-point
Ramping from 0.2
to 1.2 seconds
Ramping from 1.2
to 1.9 seconds
60
40
20
0
-20
-40
-60
-80
Position in radians speed in percentage
0
100
200
300
400
500
600
Time series

FIG. 17(b)

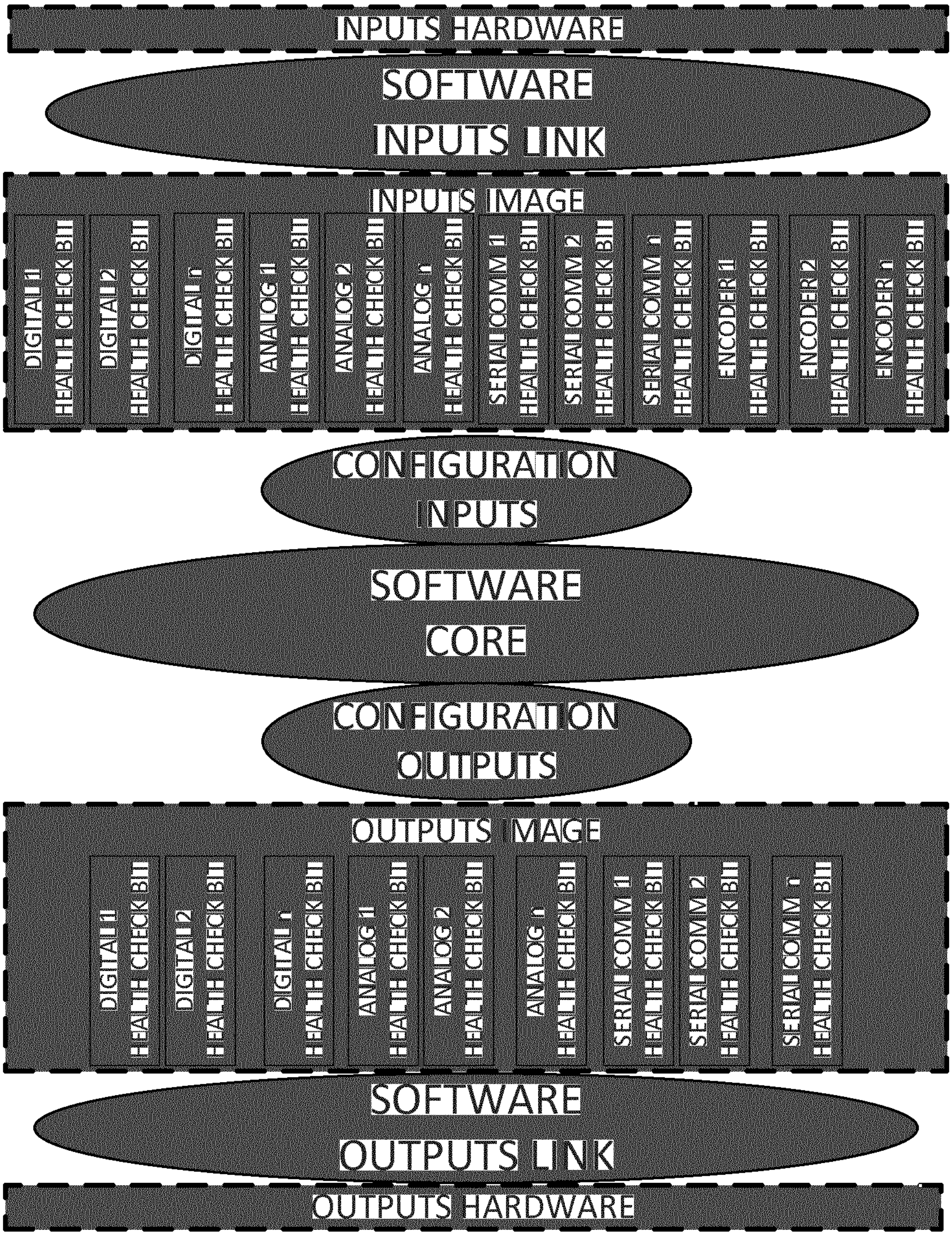
INPUTS HARDWARE
SOFTWARE INPUTS LINK
INPUTS IMAGE
DIGITAL 1 HEALTH CHECK BIT
DIGITAL 2 HEALTH CHECK BIT
DIGITAL n HEALTH CHECK BIT
ANALOG 1 HEALTH CHECK BIT
ANALOG 2 HEALTH CHECK BIT
ANALOG n HEALTH CHECK BIT
SERIAL COMM 1 HEALTH CHECK BIT
SERIAL COMM 2 HEALTH CHECK BIT
SERIAL COMM n HEALTH CHECK BIT
ENCODER 1 HEALTH CHECK BIT
ENCODER 2 HEALTH CHECK BIT
ENCODER n HEALTH CHECK BIT
CONFIGURATION INPUTS
SOFTWARE CORE
CONFIGURATION OUTPUTS
OUTPUTS IMAGE
DIGITAL 1 HEALTH CHECK BIT
DIGITAL 2 HEALTH CHECK BIT
DIGITAL n HEALTH CHECK BIT
ANALOG 1 HEALTH CHECK BIT
ANALOG 2 HEALTH CHECK BIT
ANALOG n HEALTH CHECK BIT
SERIAL COMM 1 HEALTH CHECK BIT
SERIAL COMM 2 HEALTH CHECK BIT
SERIAL COMM n HEALTH CHECK BIT
SOFTWARE OUTPUTS LINK
OUTPUTS HARDWARE

FIG. 18

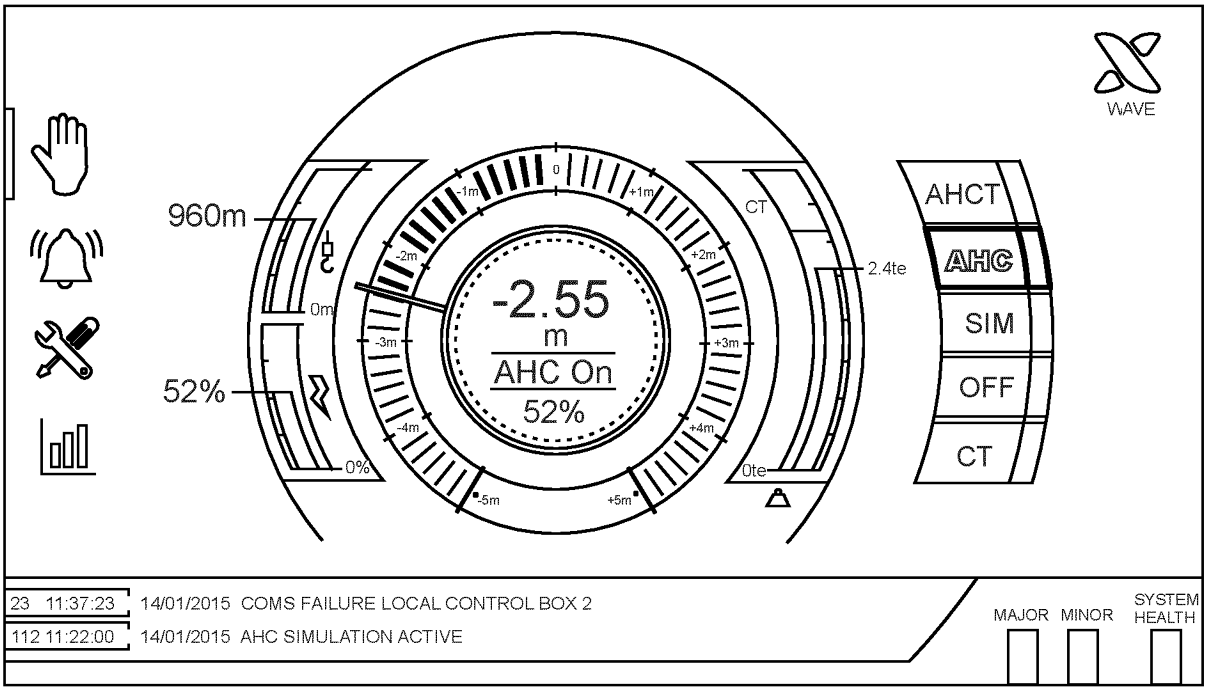
WAVE
960m
0m
52%
0%
0
-1m
+1m
-2m
+2m
-3m
+3m
-4m
+4m
-5m
+5m
-2.55
m
AHC On
52%
CT
2.4te
0te
AHCT
AHC
SIM
OFF
CT
23 11:37:23 14/01/2015 COMS FAILURE LOCAL CONTROL BOX 2
112 11:22:00 14/01/2015 AHC SIMULATION ACTIVE
MAJOR
MINOR
SYSTEM HEALTH

(a)

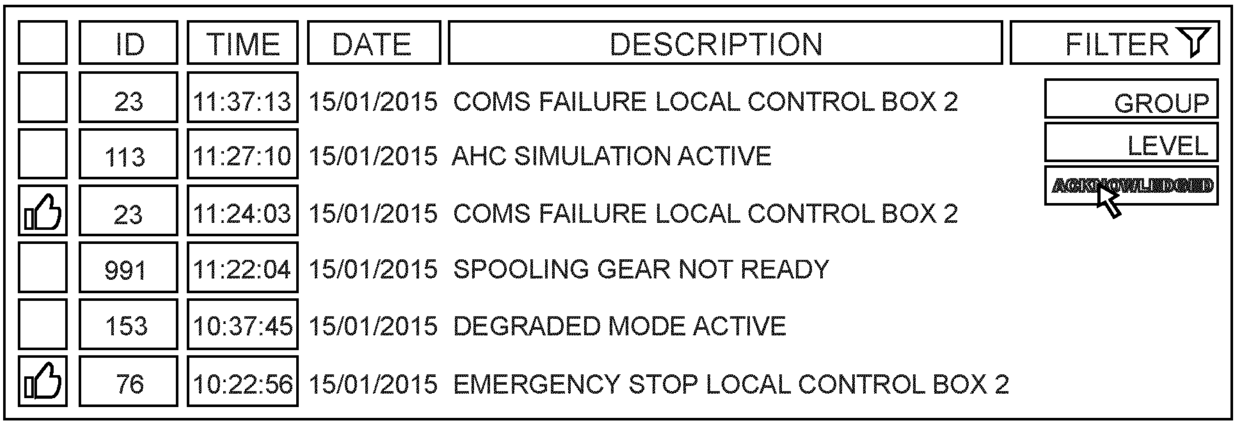
ID
TIME
DATE
DESCRIPTION
FILTER
23 11:37:13 15/01/2015 COMS FAILURE LOCAL CONTROL BOX 2
113 11:27:10 15/01/2015 AHC SIMULATION ACTIVE
23 11:24:03 15/01/2015 COMS FAILURE LOCAL CONTROL BOX 2
991 11:22:04 15/01/2015 SPOOLING GEAR NOT READY
153 10:37:45 15/01/2015 DEGRADED MODE ACTIVE
76 10:22:56 15/01/2015 EMERGENCY STOP LOCAL CONTROL BOX 2
GROUP
LEVEL
ACKNOWLEDGED

(b)

FIG. 19

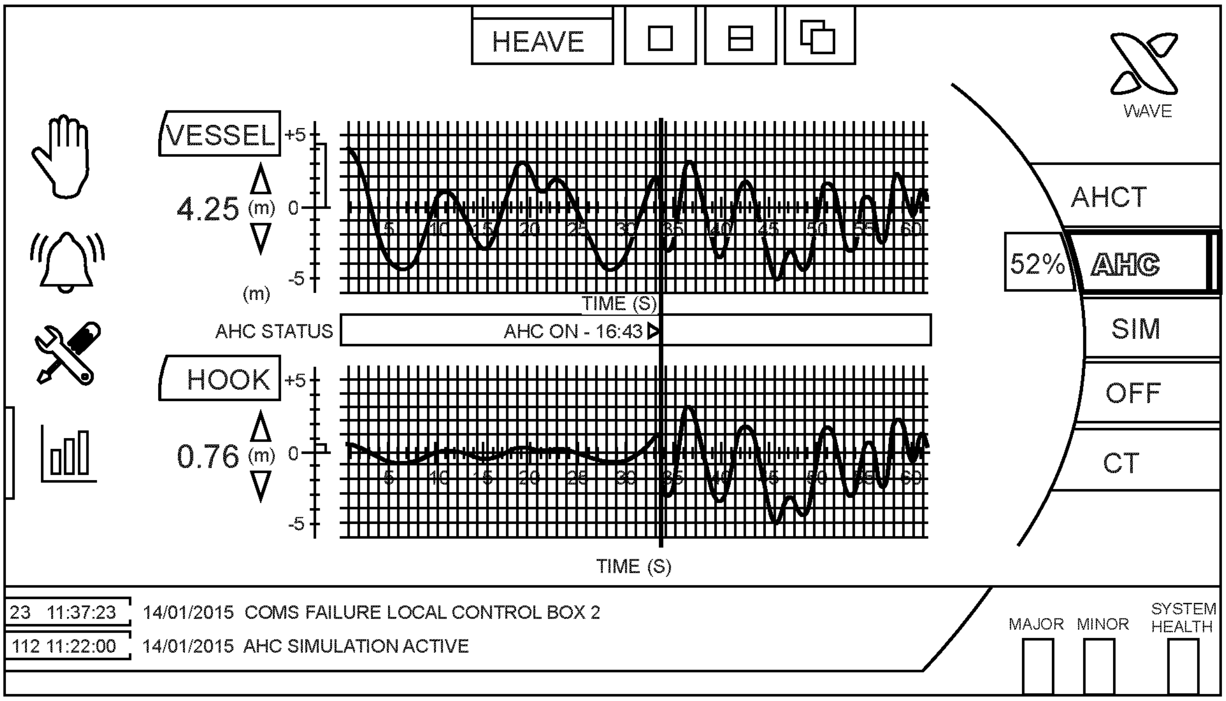
HEAVE
WAVE
VESSEL
4.25 (m)
(m)
TIME (S)
AHC STATUS
AHC ON - 16:43
HOOK
0.76 (m)
TIME (S)
AHCT
52%
AHC
SIM
OFF
CT
23 11:37:23 14/01/2015 COMS FAILURE LOCAL CONTROL BOX 2
112 11:22:00 14/01/2015 AHC SIMULATION ACTIVE
MAJOR
MINOR
SYSTEM HEALTH

(a)

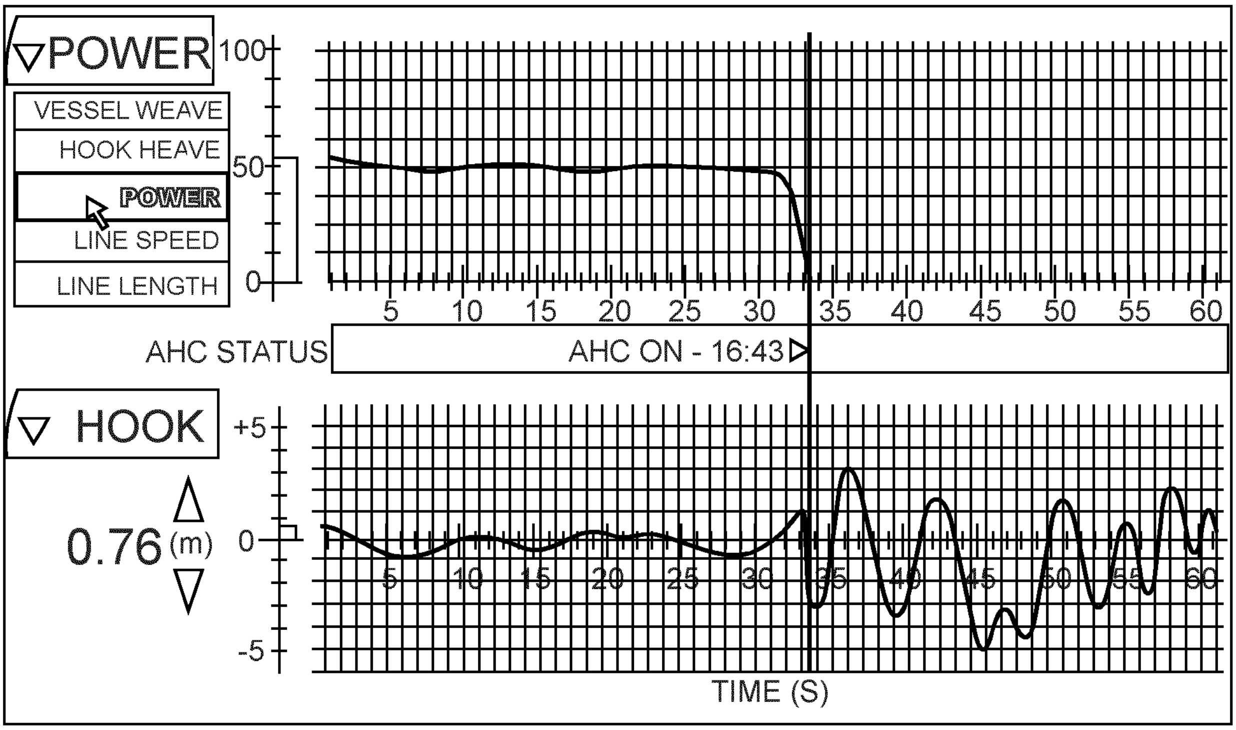
POWER
VESSEL WEAVE
HOOK HEAVE
POWER
LINE SPEED
LINE LENGTH
AHC STATUS
AHC ON - 16:43
HOOK
0.76 (m)
TIME (S)

(b)

FIG. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20100230370 A
- CN 103318776